# EUROPEAN PATENT APPLICATION

(11) **EP 3 214 881 A1**
(43) Date of publication of application: **06.09.2017**
(21) Application number: 14907119.3
(22) Date of filing: 26.11.2014
(51) Int. Cl.: H04W 72/04

(54) **METHOD FOR PROCESSING DATA, NETWORK NODE AND TERMINAL**

(71) Applicant: Huawei Technologies Co., Ltd., Longgang District Shenzhen, Guangdong 518129 (CN)
(72) Inventor: SHEN, Haihua, Shenzhen Guangdong 518129 (CN); CHEN, Dageng, Shenzhen Guangdong 518129 (CN)
(74) Representative: Pfenning, Meinig & Partner mbB
(86) International application number: PCT/CN2014/092271
(87) International publication number: WO 2016/082123

(57) **Abstract**

Disclosed are a method for processing data, a network node, and a terminal. The method includes: determining a first data block division manner according to first baseband capability information, where the first baseband capability information includes at least one piece of: capability information, space layer information, or time-frequency resource information of a baseband processing unit; dividing a to-be-sent data block into first processing blocks according to the first data block division manner; and performing first baseband processing on the first processing block based on a granularity of the first processing block. Embodiments of the present invention can reduce data transmission time in a baseband processing process.

## Description

### TECHNICAL FIELD

Embodiments of the present invention relate to the communications field, and more specifically, to a method for processing data, a network node, and a terminal.

### BACKGROUND

To meet operators' requirements of networks supporting multiple standards and ever-increasing mobile data services, a centralized baseband processing architecture is proposed (this architecture can support multiple standards and centralized baseband processing, is easy to implement a complex system, and facilitates software and hardware upgrade). If this architecture is used to process a complex scenario, to ensure a real-time feature of a system, multiple processing units need to concurrently perform baseband processing. During baseband processing, however, resource mapping is performed on an encoded data block based on an entire transport block (English: Transport Block, TB for short). One TB may be divided into multiple code blocks (English: Code Block, CB for short). During baseband processing, data is processed based on a granularity of CB in some steps, but data is processed based on a granularity of TB in some steps. In this way, concurrent processing by the multiple processing units causes a large amount of exchanged data during baseband processing, and therefore a large amount of data is to be transmitted.

Shortening baseband processing time is a main technical means to ensure the real-time feature of the system. The baseband processing time includes two parts: computation time and transmission time. If the transmission time is long, to ensure the real-time feature of the system, the computation time can be shortened only by increasing a quantity of baseband processing units (increasing concurrency). However, this increases the operators' operating expense.

### SUMMARY

Embodiments of the present invention provide a method for processing data, a network node, and a terminal, so as to reduce data transmission time in a baseband processing process.

According to a first aspect, an embodiment of the present invention provides a method for processing data, including:
determining a first data block division manner according to first baseband capability information, where the first baseband capability information includes at least one piece of: capability information, space layer information, or time-frequency resource information of a baseband processing unit;
dividing a to-be-sent data block into first processing blocks according to the first data block division manner; and
performing first baseband processing on the first processing blocks based on a granularity of first processing blocks.

With reference to the first aspect, in a first implementation manner of the first aspect, a stronger processing capability, of the baseband processing unit, indicated by the capability information of the baseband processing unit indicates larger first processing blocks obtained through division according to the first data block division manner; a larger quantity of space layers indicated by the space layer information indicates smaller first processing blocks obtained through division according to the first data block division manner; and a higher transmission bandwidth indicated by the time-frequency resource information indicates smaller first processing blocks obtained through division according to the first data block division manner.

With reference to the first aspect or the foregoing implementation manner, in a second implementation manner of the first aspect, the first baseband processing includes multiple first processing subprocedures, and the performing first baseband processing on the first processing blocks based on a granularity of first processing blocks includes:
in the multiple first processing subprocedures, performing processing on the first processing blocks all based on the granularity of first processing blocks.

With reference to the first aspect or the foregoing implementation manner, in a third implementation manner of the first aspect, the multiple first processing subprocedures include channel coding, scrambling, modulation, and time-frequency resource mapping, and the performing first baseband processing on the first processing blocks based on a granularity of first processing blocks includes:
performing channel coding, scrambling, modulation, and time-frequency resource mapping on the first processing blocks based on the granularity of first processing blocks.

With reference to the first aspect or the foregoing implementation manner, in a fourth implementation manner of the first aspect, the performing time-frequency resource mapping on the first processing blocks based on the granularity of first processing blocks includes:
separately mapping each first processing block in the modulated first processing blocks to a time-frequency resource block according to a time-frequency resource mapping manner.

With reference to the first aspect or the foregoing implementation manner, in a fifth implementation manner of the first aspect, the time-frequency resource mapping manner includes a block orthogonal time-frequency resource mapping manner or a discrete orthogonal time-frequency resource mapping manner.

With reference to the first aspect or the foregoing implementation manner, in a sixth implementation manner of the first aspect, the method further includes:
determining a second data block division manner according to second baseband capability information, where the second baseband capability information includes at least one piece of: the capability information, the space layer information, or the time-frequency resource information of the baseband processing unit;
sending the second data block division manner to a terminal;
receiving, from the terminal, data that is obtained after the terminal performs the first baseband processing based on a granularity of second processing blocks obtained through division according to the second data block division manner; and
performing second baseband processing, based on the granularity of second processing blocks, on the data received from the terminal.

With reference to the first aspect or the foregoing implementation manner, in a seventh implementation manner of the first aspect, the second baseband processing includes multiple second processing subprocedures, and the performing second baseband processing, based on the granularity of second processing blocks, on the data received from the terminal includes:
in the multiple second processing subprocedures, performing processing, all based on the granularity of second processing blocks, on the data received from the terminal.

With reference to the first aspect or the foregoing implementation manner, in an eighth implementation manner of the first aspect, the multiple second processing subprocedures include demapping, demodulation, descrambling, and channel decoding, and the performing second baseband processing, based on the granularity of second processing blocks, on the data received from the terminal includes:
performing demapping, demodulation, descrambling, and channel decoding, based on the granularity of second processing blocks, on the data received from the terminal.

With reference to the first aspect or the foregoing implementation manner, in a ninth implementation manner of the first aspect, the first baseband processing includes multiple-input multiple-output beamforming MIMO BF coding, and the second baseband processing includes MIMO BF decoding;
the performing first baseband processing on the first processing blocks based on a granularity of first processing blocks includes:
performing channel coding, scrambling, modulation, time-frequency resource mapping, and MIMO BF coding on the first processing blocks based on the granularity of first processing blocks; and
the performing second baseband processing, based on the granularity of second processing blocks, on the data received from the terminal includes:
   performing MIMO BF decoding, demapping, demodulation, descrambling, and channel decoding, based on the granularity of second processing blocks, on the data received from the terminal.

With reference to the first aspect or the foregoing implementation manner, in a tenth implementation manner of the first aspect, the capability information of the baseband processing unit includes at least one piece of: capability information of a baseband processing unit of a network node, or capability information of a baseband processing unit of the terminal.

According to a second aspect, an embodiment of the present invention provides a method for processing data, including:
receiving a second data block division manner from a network node, where the second data block division manner is determined by the network node according to second baseband capability information, and the second baseband capability information includes at least one piece of: capability information, space layer information, or time-frequency resource information of a baseband processing unit;
dividing a to-be-sent data block into second processing blocks according to the second data block division manner; and
performing first baseband processing on the second processing blocks based on a granularity of second processing blocks.

With reference to the second aspect, in a first implementation manner of the second aspect, a stronger processing capability, of the baseband processing unit, indicated by the capability information of the baseband processing unit indicates larger second processing blocks obtained through division according to the second data block division manner; a larger quantity of space layers indicated by the space layer information indicates smaller second processing blocks obtained through division according to the second data block division manner; and a higher transmission bandwidth indicated by the time-frequency resource information indicates smaller second processing blocks obtained through division according to the second data block division manner.

With reference to the second aspect or the foregoing implementation manner, in a second implementation manner of the second aspect, the first baseband processing includes multiple first processing subprocedures, and the performing first baseband processing on the second processing blocks based on a granularity of second processing blocks includes:
in the multiple first processing subprocedures, performing processing on the second processing blocks all based on the granularity of second processing blocks.

With reference to the second aspect or the foregoing implementation manner, in a third implementation manner of the second aspect, the multiple first processing subprocedures include channel coding, scrambling, modulation, and time-frequency resource mapping, and the performing first baseband processing on the second processing blocks based on a granularity of second processing blocks includes:
performing channel coding, scrambling, modulation, and time-frequency resource mapping on the second processing blocks based on the granularity of second processing blocks.

With reference to the second aspect or the foregoing implementation manner, in a fourth implementation manner of the second aspect, the performing time-frequency resource mapping on the second processing blocks based on the granularity of second processing blocks includes:
separately mapping each second processing block in the modulated second processing blocks to a time-frequency resource block according to a time-frequency resource mapping manner.

With reference to the second aspect or the foregoing implementation manner, in a fifth implementation manner of the second aspect, the time-frequency resource mapping manner includes a block orthogonal time-frequency resource mapping manner or a discrete orthogonal time-frequency resource mapping manner.

With reference to the second aspect or the foregoing implementation manner, in a sixth implementation manner of the second aspect, the method further includes:
receiving, from the network node, a first data block division manner, and data that is obtained after the network node performs the first baseband processing based on a granularity of first processing blocks obtained through division according to the first data block division manner; and
performing second baseband processing, based on the granularity of first processing blocks, on the data received from the network node.

With reference to the second aspect or the foregoing implementation manner, in a seventh implementation manner of the second aspect, the second baseband processing includes multiple second processing subprocedures, and the performing second baseband processing, based on the granularity of first processing blocks, on the data received from the network node includes:
in the multiple second processing subprocedures, performing processing, all based on the granularity of first processing blocks, on the data received from the network node.

With reference to the second aspect or the foregoing implementation manner, in an eighth implementation manner of the second aspect, the multiple second processing subprocedures include demapping, demodulation, descrambling, and channel decoding, and the performing second baseband processing, based on the granularity of first processing blocks, on the data received from the network node includes:
performing demapping, demodulation, descrambling, and channel decoding, based on the granularity of first processing blocks, on the data received from the network node.

With reference to the second aspect or the foregoing implementation manner, in a ninth implementation manner of the second aspect, the first baseband processing includes multiple-input multiple-output beamforming MIMO BF coding, and the second baseband processing includes MIMO BF decoding;
the performing first baseband processing on the second processing blocks based on a granularity of second processing blocks includes:
performing channel coding, scrambling, modulation, time-frequency resource mapping, and MIMO BF coding on the second processing blocks based on the granularity of second processing blocks; and
the performing second baseband processing, based on the granularity of first processing blocks, on the data received from the network node includes:
   performing MIMO BF decoding, demapping, demodulation, descrambling, and channel decoding, based on the granularity of first processing blocks, on the data received from the network node.

With reference to the second aspect or the foregoing implementation manner, in a tenth implementation manner of the second aspect, the capability information of the baseband processing unit includes at least one piece of: capability information of a baseband processing unit of the network node, or capability information of a baseband processing unit of a terminal.

According to a third aspect, an embodiment of the present invention provides a network node, including:
a determining unit, configured to determine a first data block division manner according to first baseband capability information, where the first baseband capability information includes at least one piece of: capability information, space layer information, or time-frequency resource information of a baseband processing unit; and
a processing unit, configured to divide a to-be-sent data block into first processing blocks according to the first data block division manner, and perform first baseband processing on the first processing blocks based on a granularity of first processing blocks.

With reference to the third aspect, in a first implementation manner of the third aspect, a stronger processing capability, of the baseband processing unit, indicated by the capability information of the baseband processing unit indicates larger first processing blocks obtained through division according to the first data block division manner; a larger quantity of space layers indicated by the space layer information indicates smaller first processing blocks obtained through division according to the first data block division manner; and a higher transmission bandwidth indicated by the time-frequency resource information indicates smaller first processing blocks obtained through division according to the first data block division manner.

With reference to the third aspect or the foregoing implementation manner, in a second implementation manner of the third aspect, the first baseband processing includes multiple first processing subprocedures, and the processing unit is specifically configured to, in the multiple first processing subprocedures, perform processing on the first processing blocks all based on the granularity of first processing blocks.

With reference to the third aspect or the foregoing implementation manner, in a third implementation manner of the third aspect, the multiple first processing subprocedures include channel coding, scrambling, modulation, and time-frequency resource mapping, and the processing unit is specifically configured to perform channel coding, scrambling, modulation, and time-frequency resource mapping on the first processing blocks based on the granularity of first processing blocks.

With reference to the third aspect or the foregoing implementation manner, in a fourth implementation manner of the third aspect, the processing unit is specifically configured to separately map each first processing block in the modulated first processing blocks to a time-frequency resource block according to a time-frequency resource mapping manner.

With reference to the third aspect or the foregoing implementation manner, in a fifth implementation manner of the third aspect, the time-frequency resource mapping manner includes a block orthogonal time-frequency resource mapping manner or a discrete orthogonal time-frequency resource mapping manner.

With reference to the third aspect or the foregoing implementation manner, in a sixth implementation manner of the third aspect, the network node further includes a sending unit and a receiving unit;
the determining unit is further configured to determine a second data block division manner according to second baseband capability information, where the second baseband capability information includes at least one piece of: the capability information, the space layer information, or the time-frequency resource information of the baseband processing unit;
the sending unit is configured to send the second data block division manner to a terminal;
the receiving unit is configured to receive, from the terminal, data that is obtained after the terminal performs the first baseband processing based on a granularity of second processing blocks obtained through division according to the second data block division manner; and
the processing unit is further configured to perform second baseband processing, based on the granularity of second processing blocks, on the data received from the terminal.

With reference to the third aspect or the foregoing implementation manner, in a seventh implementation manner of the third aspect, the second baseband processing includes multiple second processing subprocedures, and the processing unit is specifically configured to, in the multiple second processing subprocedures, perform processing, all based on the granularity of second processing blocks, on the data received from the terminal.

With reference to the third aspect or the foregoing implementation manner, in an eighth implementation manner of the third aspect, the multiple second processing subprocedures include demapping, demodulation, descrambling, and channel decoding, and the processing unit is specifically configured to perform demapping, demodulation, descrambling, and channel decoding, based on the granularity of second processing blocks, on the data received from the terminal.

With reference to the third aspect or the foregoing implementation manner, in a ninth implementation manner of the third aspect, the first baseband processing includes multiple-input multiple-output beamforming MIMO BF coding, and the second baseband processing includes MIMO BF decoding;
the processing unit is specifically configured to perform channel coding, scrambling, modulation, time-frequency resource mapping, and MIMO BF coding on the first processing blocks based on the granularity of first processing blocks; and perform MIMO BF decoding, demapping, demodulation, descrambling, and channel decoding, based on the granularity of second processing blocks, on the data received from the terminal.

With reference to the third aspect or the foregoing implementation manner, in a tenth implementation manner of the third aspect, the capability information of the baseband processing unit includes at least one piece of: capability information of a baseband processing unit of the network node, or capability information of a baseband processing unit of the terminal.

According to a fourth aspect, an embodiment of the present invention provides a terminal, including:
a receiving unit, configured to receive a second data block division manner from a network node, where the second data block division manner is determined by the network node according to second baseband capability information, and the second baseband capability information includes at least one piece of: capability information, space layer information, or time-frequency resource information of a baseband processing unit; and
a processing unit, configured to divide a to-be-sent data block into second processing blocks according to the second data block division manner, and perform first baseband processing on the second processing blocks based on a granularity of second processing blocks.

With reference to the fourth aspect, in a first implementation manner of the fourth aspect, a stronger processing capability, of the baseband processing unit, indicated by the capability information of the baseband processing unit indicates larger second processing blocks obtained through division according to the second data block division manner; a larger quantity of space layers indicated by the space layer information indicates smaller second processing blocks obtained through division according to the second data block division manner; and a higher transmission bandwidth indicated by the time-frequency resource information indicates smaller second processing blocks obtained through division according to the second data block division manner.

With reference to the fourth aspect or the foregoing implementation manner, in a second implementation manner of the fourth aspect, the first baseband processing includes multiple first processing subprocedures, and the processing unit is specifically configured to, in the multiple first processing subprocedures, performing processing on the second processing blocks all based on the granularity of second processing blocks.

With reference to the fourth aspect or the foregoing implementation manner, in a third implementation manner of the fourth aspect, the multiple first processing subprocedures include channel coding, scrambling, modulation, and time-frequency resource mapping, and the processing unit is specifically configured to perform channel coding, scrambling, modulation, and time-frequency resource mapping on the second processing blocks based on the granularity of second processing blocks.

With reference to the fourth aspect or the foregoing implementation manner, in a fourth implementation manner of the fourth aspect, the processing unit is specifically configured to separately map each second processing block in the modulated second processing blocks to a time-frequency resource block according to a time-frequency resource mapping manner.

With reference to the fourth aspect or the foregoing implementation manner, in a fifth implementation manner of the fourth aspect, the time-frequency resource mapping manner includes a block orthogonal time-frequency resource mapping manner or a discrete orthogonal time-frequency resource mapping manner.

With reference to the fourth aspect or the foregoing implementation manner, in a sixth implementation manner of the fourth aspect, the receiving unit is further configured to receive, from the network node, a first data block division manner, and data that is obtained after the network node performs the first baseband processing based on a granularity of first processing blocks obtained through division according to the first data block division manner; and
the processing unit is further configured to perform second baseband processing, based on the granularity of first processing blocks, on the data received from the network node.

With reference to the fourth aspect or the foregoing implementation manner, in a seventh implementation manner of the fourth aspect, the second baseband processing includes multiple second processing subprocedures, and the processing unit is specifically configured to, in the multiple second processing subprocedures, perform processing, all based on the granularity of first processing blocks, on the data received from the network node.

With reference to the fourth aspect or the foregoing implementation manner, in an eighth implementation manner of the fourth aspect, the multiple second processing subprocedures include demapping, demodulation, descrambling, and channel decoding, and the processing unit is specifically configured to perform demapping, demodulation, descrambling, and channel decoding, based on the granularity of first processing blocks, on the data received from the network node.

With reference to the fourth aspect or the foregoing implementation manner, in a ninth implementation manner of the fourth aspect, the first baseband processing includes multiple-input multiple-output beamforming MIMO BF coding, and the second baseband processing includes MIMO BF decoding;
the processing unit is specifically configured to perform channel coding, scrambling, modulation, time-frequency resource mapping, and MIMO BF coding on the second processing blocks based on the granularity of second processing blocks; and perform MIMO BF decoding, demapping, demodulation, descrambling, and channel decoding, based on the granularity of first processing blocks, on the data received from the network node.

With reference to the fourth aspect or the foregoing implementation manner, in a tenth implementation manner of the fourth aspect, the capability information of the baseband processing unit includes at least one piece of: capability information of a baseband processing unit of the network node, or capability information of a baseband processing unit of the terminal.

Based on the technical solutions, a data block division manner is first determined according to baseband capability information in the embodiments of the present invention. Then, a data block is divided into processing blocks according to the data block division manner. In this way, in a baseband processing process, data processing based on a granularity of processing blocks can reduce data exchange involved in data distribution and aggregation between baseband processing units, and therefore can reduce data transmission time in the baseband processing process.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 shows a wireless communications system in the embodiments of this specification;
FIG. 2 is a schematic flowchart of a method for processing data according to an embodiment of the present invention;
FIG. 3 is a schematic flowchart of a baseband processing process according to an embodiment of the present invention;
FIG. 4 is a schematic flowchart of a baseband processing process according to another embodiment of the present invention;
FIG. 5 is a schematic diagram of a time-frequency resource mapping manner according to an embodiment of the present invention;
FIG. 6 is a schematic flowchart of a method for processing data according to an embodiment of the present invention;
FIG. 7 is a schematic block diagram of a network node according to an embodiment of the present invention;
FIG. 8 is a schematic block diagram of a terminal according to an embodiment of the present invention;
FIG. 9 is a schematic block diagram of a network node according to another embodiment of the present invention; and
FIG. 10 is a schematic block diagram of a terminal according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

Multiple embodiments are described with reference to the accompanying drawings, and same components in this specification are indicated by a same reference numeral. In the following description, for ease of explanation, many specific details are provided to facilitate comprehensive understanding of one or more embodiments. However, apparently, the embodiments may also not be implemented by using these specific details. In other examples, a well-known structure and device are shown in a form of block diagrams, to conveniently describe one or more embodiments.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

In addition, aspects or features of the present invention may be implemented as a method, an apparatus or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a CD (Compact Disk, compact disk), a DVD (Digital Versatile Disk, digital versatile disk), a smart card and a flash memory component (for example, EPROM (Erasable Programmable Read-Only Memory, erasable programmable read-only memory), a card, a stick, or a key drive). In addition, various storage media described in this specification may indicate one or more devices and/or other machine-readable media that is used to store information. The term "machine-readable media" may include but is not limited to a radio channel, and various other media that can store, contain and/or carry an instruction and/or data.

It should be understood that, the technical solutions of the embodiments of the present invention may be applied to various communications systems, such as: a Global System for Mobile Communications (English: Global System of Mobile communication, GSM for short) system, a Code Division Multiple Access (English: Code Division Multiple Access, CDMA for short) system, a Wideband Code Division Multiple Access (English: Wideband Code Division Multiple Access, WCDMA for short) system, a general packet radio service (English: General Packet Radio Service, GPRS for short), a Long Term Evolution (English: Long Term Evolution, LTE for short) system, an LTE frequency division duplex (English: Frequency Division Duplex, FDD for short) system, an LTE time division duplex (English: Time Division Duplex, TDD for short), a Universal Mobile Telecommunications System (English: Universal Mobile Telecommunication System, UMTS for short), a Worldwide Interoperability for Microwave Access (English: Worldwide Interoperability for Microwave Access, WiMAX for short) communications system or the like.

It should also be understood that in the embodiments of the present invention, a terminal may be user equipment (English: User Equipment, UE for short), a mobile station (English: Mobile Station, MS for short), a mobile terminal (Mobile Terminal), or the like. The terminal may communicate with one or more core networks by using a radio access network (English: Radio Access Network, RAN for short). Alternatively, the terminal may be a device that accesses a communications network, for example, a sensor node, or a car, or an apparatus that can access a communications network to perform communication on the terminal. For example, the terminal may be a mobile terminal (or also referred to as a "cellular" phone), and a computer that has a mobile terminal. For example, the terminal may be a portable, pocket-size, handheld, computer-integrated or in-vehicle mobile apparatus, which exchanges voice and/or data with the radio access network.

In the embodiments of the present invention, a network node may be a base station (English: Base Transceiver Station, BTS for short) in GSM or CDMA, a base station (English: NodeB, NB for short) in WCDMA, or may be an evolved NodeB (English: evolutional Node B, ENB or e-NodeB for short) in LTE, or may be a physical entity or a network node that implements a corresponding function in a next-generation network, which is not limited in the present invention.

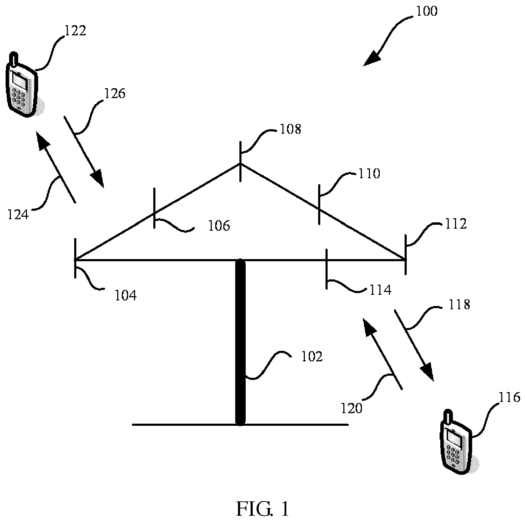

FIG. 1 shows a wireless communications system in the embodiments of this specification. The wireless communications system 100 includes a base station 102, and the base station 102 may include multiple antenna groups. Each antenna group may include one or more antennas. For example, one antenna group may include antennas 104 and 106. Another antenna group may include antennas 108 and 110. An additional group may include antennas 112 and 114. Two antennas are shown for each antenna group in FIG. 1. However, more or less antennas may be used for each group. The base station 102 may additionally include a transmitter chain and a receiver chain. A person of ordinary skill in the art may understand that both of them may include multiple components related to signal sending and receiving (for example, a processor, a modulator, a multiplexer, a demodulator, a demultiplexer, or an antenna).

The base station 102 may communicate with one or more user equipments (for example, an access terminal 116 and an access terminal 122). However, it may be understood that the base station 102 may communicate with any quantity of access terminals similar to the access terminal 116 or 122. The access terminals 116 and 122 may be, for example, a cellular phone, a smartphone, a portable computer, a handheld communications device, a handheld computing device, a satellite radio apparatus, a global positioning system, a PDA, and/or any other suitable device configured to perform communication in the wireless communications system 100. As shown in the figure, the access terminal 116 communicates with the antennas 112 and 114. The antennas 112 and 114 send information to the access terminal 116 by using a forward link 118, and receive information from the access terminal 116 by using a reverse link 120. In addition, the access terminal 122 communicates with the antennas 104 and 106. The antennas 104 and 106 send information to the access terminal 122 by using a forward link 124, and receive information from the access terminal 122 by using a reverse link 126. In an FDD (Frequency Division Duplex, frequency division duplex) system, for example, the forward link 118 may use a frequency band different from that of the reverse link 120, and the forward link 124 may use a frequency band different from that of the reverse link 126. In addition, in a TDD (Time Division Duplex, time division duplex) system, the forward link 118 may use a frequency band the same as that of the reverse link 120, and the forward link 124 may use a frequency band the same as that of the reverse link 126.

Each antenna group and/or area designed for communication is referred to as a sector of the base station 102. For example, an antenna group may be designed to communicate with an access terminal in a sector of an area covered by the base station 102. When the base station 102 communicates with the access terminals 116 and 122 by using the forward links 118 and 124 respectively, a transmit antenna of the base station 102 may improve, by means of beamforming, signal to noise ratios of the forward links 118 and 124. In addition, compared with sending, by a base station by using a single antenna, a signal to all access terminals of the base station, sending, by the base station 102 by means of beamforming, a signal to the access terminals 116 and 122 that are randomly dispersed in a related coverage area causes less interference to a mobile device in a neighboring cell.

In a given time, the base station 102, the access terminal 116 or 122 may be a sending wireless communications apparatus and/or a receiving wireless communications apparatus. When data is to be sent, the sending wireless communications apparatus may encode the data for transmission. Specifically, the sending wireless communications apparatus may obtain (for example, generate, receive from another communications apparatus, or save in a memory) a quantity of data bits that need to be transmitted to the receiving wireless communications apparatus by using a channel. The data bits may be included in a transport block (or multiple transport blocks) of data, and the transport block may be segmented to generate multiple code blocks. In addition, the sending wireless communications apparatus may encode each code block by using an encoder (not shown).

It should be understood that the wireless communications system 100 in FIG. 1 is merely an example. Communications systems that can be applied to the embodiments of the present invention are not limited thereto.

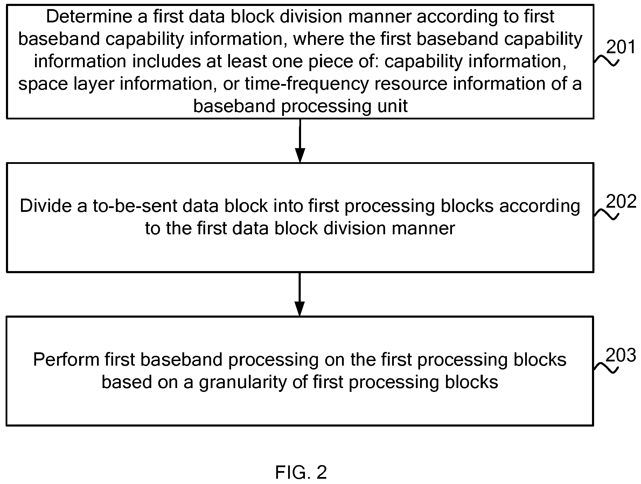

FIG. 2 is a schematic flowchart of a method for processing data according to an embodiment of the present invention. The method shown in FIG. 2 may be executed by a network node, such as the base station 102 shown in FIG. 1.

201. Determine a first data block division manner according to first baseband capability information, where the first baseband capability information includes at least one piece of: capability information, space layer information, or time-frequency resource information of a baseband processing unit.

For example, the capability information of the baseband processing unit indicates a strong or weak processing capability of the baseband processing unit, the space layer information indicates a quantity of space layers, and the time-frequency resource information indicates a high or low transmission bandwidth. The currently used first data block division manner may be determined by using one or more pieces of the three pieces of information, to obtain a granularity of data blocks that are used in a subsequent baseband processing process.

It should be understood that the three pieces of information (the capability information, the space layer information, and the time-frequency resource information of the baseband processing unit) indicate baseband capability information of a current system. For example, when the baseband capability information of the system changes, the changed baseband capability information is used as the first baseband capability information. The first data block division manner that is determined according to the first baseband capability information may be used in a downlink communication process.

202. Divide a to-be-sent data block into first processing blocks according to the first data block division manner.

203. Perform first baseband processing on the first processing blocks based on a granularity of first processing blocks.

For example, the network node is a data sender and may first divide the to-be-sent data block into first processing blocks, for example, one or more first processing blocks, according to the first data block division manner. Then, the network node performs processing on the first processing blocks based on the granularity of first processing blocks, instead of performing processing based on multiple granularities in a baseband processing process.

Based on the technical solutions, a data block division manner is first determined according to baseband capability information in the embodiments of the present invention. Then, a data block is divided into processing blocks according to the data block division manner. In this way, in a baseband processing process, data processing based on a granularity of processing blocks can reduce data exchange involved in data distribution and aggregation between baseband processing units, and therefore can reduce data transmission time in the baseband processing process.

Furthermore, because the data transmission time is reduced in the baseband processing process, a real-time feature of a system is ensured without increasing concurrency of baseband processing units (to reduce computation time in the baseband processing process). Therefore, this embodiment of the present invention can reduce operators' costs.

In addition, according to the method in this embodiment of the present invention, data processing based on a granularity of processing blocks in the baseband processing process not only can reduce an amount of data exchanges between the baseband processing units, but also can lower scheduling complexity.

It should be understood that performing first baseband processing based on a granularity of first processing blocks refers to that the first processing blocks, but not some or multiple first processing blocks in the first processing blocks, are used as a basic data unit in the baseband processing process. In addition, the network node needs to use a unified granularity (the granularity of first processing blocks) to perform data processing in the baseband processing process, but does not change the granularity for processing.

It should also be understood that the first processing blocks are only an expression of data blocks obtained through division according to the data block division manner in this embodiment of the present invention. Data blocks that are obtained through division according to the method in this embodiment of the present invention and applied to a baseband processing process should all fall within the protection scope of this embodiment of the present invention.

Optionally, in one embodiment, a stronger processing capability, of the baseband processing unit, indicated by the capability information of the baseband processing unit indicates larger first processing blocks obtained through division according to the first data block division manner; a larger quantity of space layers indicated by the space layer information indicates smaller first processing blocks obtained through division according to the first data block division manner; and a higher transmission bandwidth indicated by the time-frequency resource information indicates smaller first processing blocks obtained through division according to the first data block division manner.

When the baseband capability information includes multiple pieces in the three pieces of information, the multiple pieces of information may be combined to determine a final data block division manner (the first data block division manner).

For example, the baseband processing unit may be a server, a field programmable gate array (English: Field Programmable Gate Array, FPGA for short), or a digital signal processor (English: Digital Signal processor, DSP for short), or the like. When the baseband processing unit is a general server with a strong capability (such as a server RH2288 with a strong single-core capability), transmission data may be divided into N processing blocks. When the baseband processing unit is an ARM processor (with a weak single-core capability), if sizes of processing blocks are large, a processing speed is relatively slow. In this case, transmission data may be divided into 2N or more processing blocks, so that more data blocks can be concurrently processed.

For another example, downlink multi-user MIMO is used an example, when a small quantity of space layers (for example, eight layers) are detected, transmission data may be divided into N processing blocks considering computation complexity. Computation complexity increases when there are many space layers (for example, 16 layers). To reduce processing time, transmission blocks may be divided into 2N small processing blocks for concurrent processing. For another example, when a bandwidth is 20 MHz (that is, there are many time-frequency resources), it is assumed that transmission blocks are divided into N processing blocks. When a bandwidth is 40 MHz (that is, there are a few time-frequency resources), transmission blocks may be divided into 2N processing blocks for concurrent processing.

When the baseband capability information includes multiple pieces in the three pieces of information, the multiple pieces of information may be comprehensively considered to determine a final division manner. For example, when the baseband processing unit is a general server with a strong capability (such as a server RH2288 with a strong single-core capability), and there are many space layers (for example, 16 layers), transmission data may be divided into M processing blocks, where N≤M≤2N. If a capability of the baseband processing unit is preferentially considered, M may be set to N.

If a quantity of space layers is preferentially considered, M may be set to 2N. Alternatively, if the two pieces of information are comprehensively considered, M may be set to an intermediate value between N to 2N. It should be noted that these examples are provided to help a person skilled in the art better understand this embodiment of the present invention, but not to limit the scope of this embodiment of the present invention. For example, a data block division manner mapping table may be stored in a form of table. When the capability information, the space layer information, and the time-frequency resource information of the baseband processing unit are determined, a quantity of processing blocks obtained through division may be directly found in the mapping table.

It is assumed that A indicates: a CPU quantity is 2, a CPU frequency is 2. 7 GHz, and a quantity of single CPU cores is 8. It is assumed that B indicates: a quantity B of space layers = 8 (1≤ B≤M1, and M1 is a quantity of network-side antennas). It is assumed that C indicates: a transmission bandwidth C=20 MHz (0<C<M2, and M2 is a maximum allocable bandwidth, for example, 20 MHz, 40 MHz, 60 MHz, 80 MHz, or the like). Factors A, B, and C may be comprehensively considered to divide a data block into N processing blocks.

When the three factors A, B, and C respectively change according to coefficients Y1, Y2, and Y3, that is, respectively change to Y1*A, Y2*B, and Y3*C, a data block may be divided into D processing blocks.

D = ceil ((N*X1)/Y1 + (N*X2)*Y2 + (N*X3)*Y2), 1≥X1≥0, 1≥X2≥0, 1≥X3≥0, Y1>0, Y2>0, Y3>0. X1, X2, and X3 indicate weights of the three factors A, B, and C.

In addition to the capability information, the space layer information, and the time-frequency resource information of the baseband processing unit, it should also be understood that the baseband capability information may further include other information, for example, order of a modulation and coding scheme (English: Modulation and Coding Scheme, MCS for short). Any information that affects a data block division manner may be used as the capability information of the baseband processing unit. The foregoing changes should all fall within the protection scope of this embodiment of the present invention.

Optionally, in another embodiment, the first baseband processing includes multiple first processing subprocedures. In this case, when the first baseband processing is performed on the first processing blocks based on the granularity of first processing blocks, in the multiple first processing subprocedures, processing is performed on the first processing blocks all based on the granularity of first processing blocks.

Optionally, in another embodiment, the multiple first processing subprocedures include channel coding, scrambling, modulation, and time-frequency resource mapping. In this case, when the first baseband processing is performed on the first processing blocks based on the granularity of first processing blocks, channel coding, scrambling, modulation, and time-frequency resource mapping are performed on the first processing blocks based on the granularity of first processing blocks.

For example, the network node is a data sender and may first divide the to-be-sent data block into first processing blocks, for example, one or more first processing blocks, according to the first data block division manner. Then, channel coding, scrambling, modulation, and time-frequency resource mapping are separately performed based on the granularity of first processing blocks. It should be understood that channel coding generally includes a cyclic redundancy check, error correction coding, and rate matching.

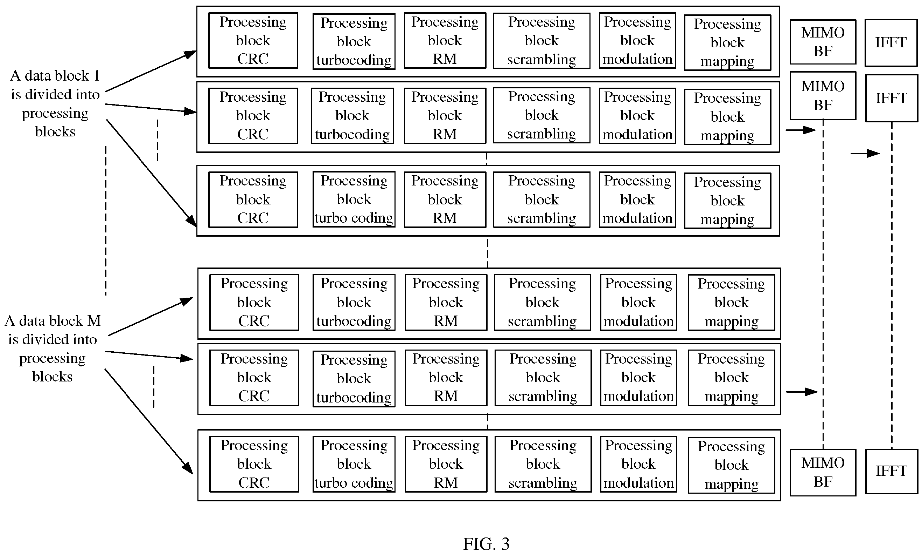

FIG. 3 is a schematic flowchart of a baseband processing process according to an embodiment of the present invention. With reference to FIG. 3, actions performed by the network node that functions as a data sender in this embodiment of the present invention are described in details below. It should be noted that these examples are provided to help a person skilled in the art better understand this embodiment of the present invention, but not to limit the scope of this embodiment of the present invention.

In a multiple-input multiple-output (English: Multiple Input Multiple Output, MIMO for short) scenario shown in FIG. 3, a system architecture is generally complex, and therefore multiple concurrent baseband processing units are set for the system to perform data processing. The method in this embodiment of the present invention can reduce data transmission between the baseband processing units.

As shown in FIG. 3, it is assumed that to-be-transmitted data has been divided into M data blocks, for example, transmission blocks TBs. In this embodiment of the present invention, the M data blocks are separately divided into multiple processing blocks (the first processing blocks) according to the first data block division manner. It should be understood that obtaining, through division, the first processing blocks based on already divided data blocks is only one implementation manner of this embodiment of the present invention. The protection scope of this embodiment of the present invention is not limited thereto. For example, when the to-be-transmitted data is obtained, the to-be-transmitted data is directly divided into the first processing blocks according to the first data block division manner.

Then, the first processing blocks are distributed into the baseband processing units for baseband processing. Specifically, as shown in FIG. 3, the baseband processing units separately perform baseband processing on the to-be-transmitted data based on the granularity of first processing blocks. For example, CRC, turbo coding (a type of error correction coding), rate matching (English: Rate Matching, RM for short), scrambling, modulation (for example, quadrature amplitude modulation (English: Quadrature Amplitude Modulation, QAM for short)), and mapping are performed on the first processing blocks. Therefore, CRC needs to be performed on the first processing blocks only once in the baseband processing process, instead of performing two times of CRC: TB CRC and CB CRC.

It should be specially emphasized that an error correction coding manner is not limited in this embodiment of the present invention. turbo coding is only one example of this embodiment of the present invention and the protection scope of this embodiment of the present invention is not limited thereto. For example, the error correction coding manner may be convolution coding, low density parity check code (English: low density parity check code, LDPC for short), or another coding manner.

It should be further specially emphasized that in the modulation process of the first processing blocks, the first processing blocks may use a same or different modulation and coding schemes MCS. That is, the MCS may be determined based on a level of first processing blocks after division, or based on a level of TB.

It should be further specially emphasized that in the mapping process of the first processing blocks, the first processing blocks are used as individual elements and are separately mapped to corresponding time-frequency resource blocks according to a time-frequency resource mapping manner.

The division manner of the first processing blocks and the time-frequency resource mapping manner may be adaptively adjusted according to actual situations, and then delivered to a terminal by means of broadcast, a control channel, or another manner.

In the MIMO scenario, processing such as MIMO beamforming (English: Beam Forming, BF for short) and inverse fast Fourier transformation (English: Inverse Fast Fourier Transform, IFFT for short) needs to subsequently be performed on the first processing blocks obtained after the baseband processing, to finally transmit the data. The MIMO BF process may be performed based on the granularity of first processing blocks or a granularity smaller than the first processing blocks. This embodiment of the present invention sets no limit thereto.

The technical solution can reduce data exchange by the data sender between the baseband processing units. CRC to QAM modulation shown in FIG. 3 are performed based on the granularity of processing blocks, and data transmission is not required between the baseband processing units. During mapping and MIMO coding of the processing blocks, some data may be transmitted or not transmitted according to the actual system complexity.

For example, when there are a large amount of transmitted data and many flows, MIMO coding may be performed based on a smaller granularity obtained through division, to ensure the real-time feature. Therefore, according to this embodiment of the present invention, an amount of data exchanges in the baseband processing process, transmission time, scheduling complexity, a quantity of baseband processing units (that is, concurrency of the baseband processing units is decreased), and operators' costs are reduced.

Optionally, in another embodiment, when time-frequency resource mapping is performed on the first processing blocks based on the granularity of first processing blocks, each first processing block in the modulated first processing blocks is separately mapped to a time-frequency resource block according to a time-frequency resource mapping manner.

For example, the network node may map the processed first processing blocks to time-frequency resource blocks according to a time-frequency resource mapping manner that is pre-agreed with the terminal or one obtained time-frequency resource mapping manner, that is, separately and individually map the first processing blocks to the time-frequency resource blocks. In a scenario in which there is no pre-agreed time-frequency resource mapping manner, the network node may send the used time-frequency resource mapping manner to the terminal. This embodiment of the present invention sets no limit thereto.

Optionally, in another embodiment, the network node may further determine a second data block division manner according to second baseband capability information. The second baseband capability information includes at least one piece of: the capability information, the space layer information, or the time-frequency resource information of the baseband processing unit. Then, the network node sends the second data block division manner to the terminal. Then, the network node receives, from the terminal, data that is obtained after the terminal performs the first baseband processing based on a granularity of second processing blocks obtained through division according to the second data block division manner. Finally, the network node performs second baseband processing, based on the granularity of second processing blocks, on the data received from the terminal.

It should be understood that the three pieces of information included in the second baseband capability information indicate the baseband capability information of the current system. For example, when the baseband capability information of the system changes, the changed baseband capability information is used as the second baseband capability information. The second data block division manner that is determined according to the second baseband capability information may be used in an uplink communication process. The second baseband capability information may be the same as or different from the first baseband capability information. This embodiment of the present invention sets no limit thereto. The second data block division manner may be the same as or different from the second baseband capability information. This embodiment of the present invention sets no limit thereto.

It should also be understood that a process in which the terminal performs first baseband processing on data is similar to the process in which the network node performs first baseband processing, and are both used as baseband processing processes that are executed when the terminal or the network node functions as a data sender. Similarly, the second baseband processing process refers to a baseband processing process that is executed when the terminal or the network node functions as a data receiver.

For example, after determining the second data block division manner used in the uplink communication process, the network node sends the second data block division manner to the terminal, so that the terminal performs, according to the second data block division manner, baseband processing on data to be sent to the network node. Then, the network node receives, from the terminal, data that is obtained after the terminal performs the first baseband processing based on the granularity of second processing blocks, and performs the second baseband processing based on the granularity of second processing blocks.

Optionally, in another embodiment, the second baseband processing includes multiple second processing subprocedures. In this case, when the second baseband processing is performed based on the granularity of second processing blocks on the data received from the terminal, in the multiple second processing subprocedures, processing is performed all based on the granularity of second processing blocks on the data received from the terminal.

Optionally, in another embodiment, the multiple second processing subprocedures include demapping, demodulation, descrambling, and channel decoding. In this case, when the second baseband processing is performed based on the granularity of second processing blocks on the data received from the terminal, demapping, demodulation, descrambling, and channel decoding are performed based on the granularity of second processing blocks on the data received from the terminal.

For example, the network node is a data receiver in this case. When the network node performs baseband processing on transmission data based on the granularity of second processing blocks, the network node may first demap the received transmission data according to the time-frequency resource mapping manner, to obtain the demapped second processing blocks. Then, the network node processes the demapped second processing blocks based on the granularity of second processing blocks, to obtain the processed second processing blocks. It should be understood that channel decoding generally includes rate dematching, error correction decoding, and a cyclic redundancy check.

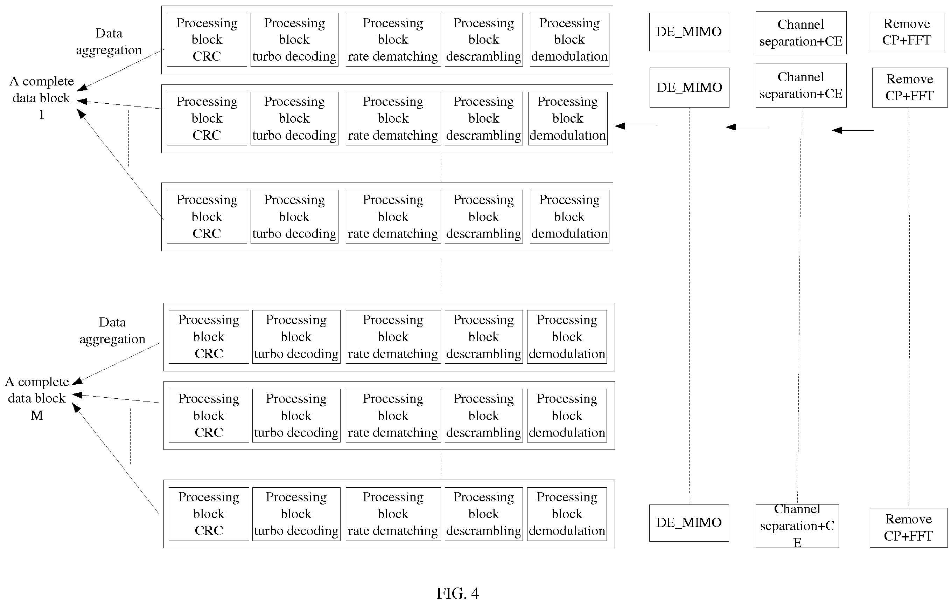

For example, FIG. 4 is a schematic flowchart of a baseband processing process according to another embodiment of the present invention. With reference to FIG. 4, actions performed by the network node that functions as a data receiver are described in details below. It should be noted that these examples are provided to help a person skilled in the art better understand this embodiment of the present invention, but not to limit the scope of this embodiment of the present invention.

In a multi-MIMO scenario shown in FIG. 4, a system architecture is generally complex, and therefore multiple concurrent baseband processing units are set for the system to perform data processing. The method in this embodiment of the present invention can reduce data transmission between the baseband processing units.

As shown in FIG. 4, the network node first demaps the processing blocks (the second processing blocks) after receiving data. Specifically, the action of demapping the second processing blocks is performed before QAM demodulation is performed on the second processing blocks. As shown in FIG. 4, after receiving the data, the network node first removes a cyclic prefix (English: Cyclic Prefix, CP for short), and then performs fast Fourier transform (English: Fast Fourier Transform, FFT for short).

Then, the network node performs, according to parsed control information and the time-frequency resource mapping manner, channel separation and channel estimation (English: Channel Estimate, CE for short) on frequency domain data that is obtained after FFT is performed. That is, during channel separation, the network node demaps the second processing blocks according to the time-frequency resource mapping manner. Specially, in the MIMO scenario, the network node further needs to perform MIMO decoding (that is, DE_MIMO) after channel separation. For example, the network node distributes, based on the granularity of second processing blocks or a smaller granularity (when there are many antennas and flows), data obtained after channel separation to the baseband processing units to perform MIMO decoding.

Then, the baseband processing units separately perform, based on the granularity of second processing blocks, baseband processing on data on which MIMO decoding is to be performed. For example, demodulation, descrambling, rate dematching, turbo decoding (a type of error correction decoding), and CRC are performed on the second processing blocks. Finally, the second processing blocks are aggregated into a complete TB.

The division manner of the second processing blocks and the time-frequency resource mapping manner may be adaptively adjusted according to actual situations, and then delivered to the terminal by means of broadcast, a control channel, or another manner.

The technical solution can reduce data exchange by the data sender between the baseband processing units. CRC to demodulation shown in FIG. 4 are performed based on the granularity of second processing blocks, and data transmission is not required between the baseband processing units. During mapping and MIMO coding of the second processing blocks, some data may be transmitted or not transmitted according to the actual system complexity. For example, when there are a large amount of transmitted data and many flows, MIMO coding may be performed based on a smaller granularity obtained through division, to ensure the real-time feature.

Therefore, according to this embodiment of the present invention, an amount of data exchanges in the baseband processing process, transmission time, scheduling complexity, a quantity of baseband processing units (that is, concurrency of the baseband processing units is decreased), and operators' costs are reduced.

Optionally, in another embodiment, the first baseband processing includes multiple-input multiple-output beamforming MIMO BF coding, and the second baseband processing includes MIMO BF decoding. In this case, when the first baseband processing is performed on the first processing blocks based on the granularity of first processing blocks, channel coding, scrambling, modulation, time-frequency resource mapping, and MIMO BF coding are performed on the first processing blocks based on the granularity of first processing blocks. When the second baseband processing is performed based on the granularity of second processing blocks on the data received from the terminal, MIMO BF decoding, demapping, demodulation, descrambling, and channel decoding are performed based on the granularity of second processing blocks on the data received from the terminal.

Optionally, in another embodiment, the capability information of the baseband processing unit includes at least one piece of: capability information of a baseband processing unit of the network node, or capability information of a baseband processing unit of the terminal.

Therefore, the network node may better adapt to actual requirements when determining a data block division manner, to further improve baseband processing performance.

For example, in a downlink single-user MIMO (SU-MIMO) scenario, UE has many receive antennas, and there are many flows to be processed. Therefore, computation complexity is high. In this case, the capability information of the baseband processing unit may include capability information of a baseband processing unit of the UE. The network node may obtain the capability information of the baseband processing unit of the UE from the UE in advance.

In a downlink multi-user MIMO (MU-MIMO) scenario, UE has a few antennas, and there are a few flows to be processed. Therefore, computation complexity is low. In this case, a relatively small amount of data is transmitted, and the capability information of the baseband processing unit may not include capability information of a baseband processing unit of the UE. For the two scenarios SU-MIMO and MU-MIMO, processing complexity of the network node is high, and the capability information of the baseband processing unit may include the capability information of the baseband processing unit of the network node.

For another example, in an uplink MU-MIMO scenario, the network node is a receiver and a decoding process is complex. The capability information of the baseband processing unit may include the capability information of the baseband processing unit of the network node. While a processing procedure of the UE is simpler and the capability information of the baseband processing unit may not include the capability information of the baseband processing unit of the UE.

Optionally, in another embodiment, the time-frequency resource mapping manner includes a block orthogonal time-frequency resource mapping manner or a discrete orthogonal time-frequency resource mapping manner

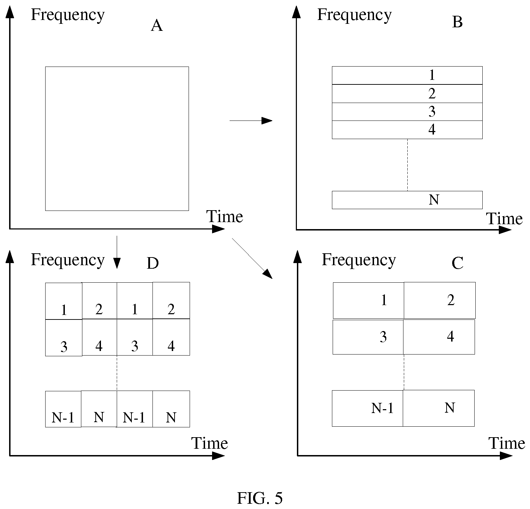

For example, FIG. 5 is a schematic diagram of a time-frequency resource mapping manner according to an embodiment of the present invention. As shown in FIG. 5, the part A shows a licensed time-frequency resource in this embodiment of the present invention. The part B shows that the time-frequency resource is divided into N time-frequency resource subblocks in a frequency domain orthogonal manner, and each processing block is mapped to a time-frequency resource subblock. The part C shows that the time-frequency resource is divided into N time-frequency resource subblocks in a time domain and frequency domain orthogonal manner, and each processing block is mapped to a time-frequency resource subblock. The part D shows that the time-frequency resource is divided into (2xN) time-frequency resource subblocks in a time domain and frequency domain orthogonal manner, and each processing block is mapped to two discretely located time-frequency resource subblocks (two time-frequency resource subblocks shown by using a same number). In a specific scenario, mapping according to the time-frequency resource mapping manner corresponding to the part D has a good anti-interference capability.

Under normal circumstances, the block orthogonal time-frequency resource mapping manner is used. When complexity is acceptable, to improve decoding performance, the discrete orthogonal time-frequency resource mapping manner may be used to distribute data into different time-frequency resources. For example, when the terminal side has a relatively poor channel in a time period and in a frequency band. To improve decoding performance, data may be distributed at different time-frequency locations. This can improve the anti-interference capability.

Optionally, in another embodiment, when sending the data block division manner to the terminal, the network node may send the data block division manner to the terminal by using a broadcast channel or a control channel.

For example, the network node may periodically broadcast the data block division manner by using the broadcast channel, or periodically send the data block division manner to the terminal by using the control channel. In a scenario in which the network node needs to send its used time-frequency resource mapping manner to the terminal, the network node may send the time-frequency resource mapping manner and the data block division manner together to the terminal.

Specifically, the data block division manner and the time-frequency resource mapping manner may be indicated by a string of bits bits (assuming that X bits and X is a positive integer). Different values indicated by the X bits correspond to different processing block division manners and time-frequency resource mapping manners. Correspondingly, a mapping table (table) may be saved at each of the network node side and the UE side. After receiving the string of bits, the UE searches in the table and finds a specific processing block division manner and a mapping manner.

A specific manner of creating a table may be one of the following three manners. It should be understood that the following three tables are only a few examples of this embodiment of the present invention. The protection scope of this embodiment of the present invention is not limited thereto.

**Table 2**

| Number corresponding to a string of X bits | Data block division manner and time-frequency resource mapping manner |
|---|---|
| 0 | The zeroth manner |
| 1 | The first manner |
| 2 | The second manner |
| 3 | The third manner |
| 4 | The fourth manner |
| ... | ... |

For example, as shown in Table 1, a string of bits being 0 indicates the zeroth manner. In the zeroth manner, division is performed based on a granularity of 100 bits and mapping is performed in a block orthogonal time-frequency resource mapping manner. Similarly, a string of bits being 1 indicates the second manner. In the second manner, division is performed based on a granularity of 110 bits and mapping is performed in a discrete orthogonal time-frequency resource mapping manner, and so on.

**Table 3**

| Number corresponding to first X1 bits in a string of X (X=X1+X2) bits | Data block division manner | Number corresponding to second X2 bits in a string of X (X=X1+X2) bits | Time-frequency resource mapping manner |
|---|---|---|---|
| 0 | The zeroth division | 0 | The zeroth mapping |
| 1 | The first division | 1 | The first mapping |
| 2 | The second division | 2 | The second mapping |
| 3 | The third division | 3 | The third mapping |
| 4 | The fourth division | 4 | The fourth mapping |
| ... | ... | ... | ... |

**Table 4**

| Number corresponding to second X1 bits in a string of X (X=X1+X2) bits | Data block division manner | Number corresponding to first X2 bits in a string of X (X=X1+X2) bits | Time-frequency resource mapping manner |
|---|---|---|---|
| 0 | The zeroth division | 0 | The zeroth mapping |
| 1 | The first division | 1 | The first mapping |
| 2 | The second division | 2 | The second mapping |
| 3 | The third division | 3 | The third mapping |
| 4 | The fourth division | 4 | The fourth mapping |
| ... | ... | ... | ... |

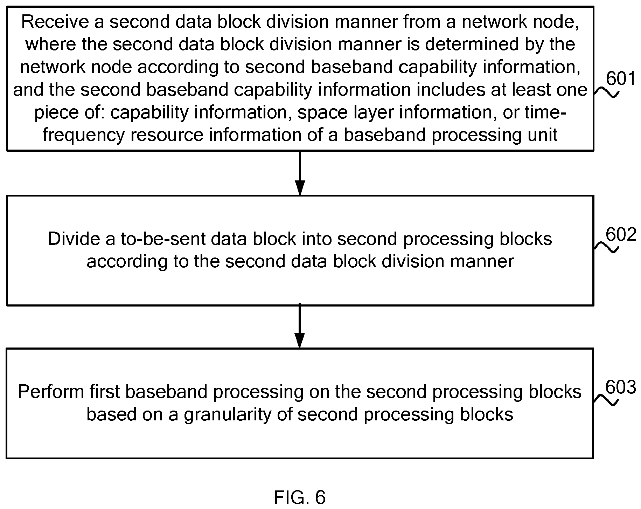

FIG. 6 is a schematic flowchart of a method for processing data according to an embodiment of the present invention. The method shown in FIG. 6 may be executed by a terminal, such as the access terminal 116 or 122 shown in FIG. 1.

601. Receive a second data block division manner from a network node, where the second data block division manner is determined by the network node according to second baseband capability information, and the second baseband capability information includes at least one piece of: capability information, space layer information, or time-frequency resource information of a baseband processing unit.

For example, the capability information of the baseband processing unit indicates a strong or weak processing capability of the baseband processing unit, the space layer information indicates a quantity of space layers, and the time-frequency resource information indicates a high or low transmission bandwidth. The network node may determine the currently used second data block division manner by using one or more pieces of the three pieces of information, to obtain a granularity of data blocks that are used in a subsequent baseband processing process. Then, the network node sends the second data block division manner to the terminal.

It should be understood that the three pieces of information (the capability information, the space layer information, and the time-frequency resource information of the baseband processing unit) indicate baseband capability information of a current system. For example, when the baseband capability information of the system changes, the changed baseband capability information is used as the first baseband capability information. The first data block division manner that is determined according to the first baseband capability information may be used in an uplink communication process.

602. Divide a to-be-sent data block into second processing blocks according to the second data block division manner.

603. Perform first baseband processing on the second processing blocks based on a granularity of second processing blocks.

For example, the terminal is a data sender and may first divide the to-be-sent data block into second processing blocks, for example, one or more second processing blocks, according to the second data block division manner. Then, the network node performs processing on the to-be-divided and to-be-sent data blocks based on the granularity of second processing blocks, instead of performing processing based on multiple granularities in a baseband processing process.

Based on the technical solutions, a data block division manner is first determined according to baseband capability information in the embodiments of the present invention. Then, a data block is divided into processing blocks according to the data block division manner. In this way, in a baseband processing process, data processing based on a granularity of processing blocks can reduce data exchange involved in data distribution and aggregation between baseband processing units, and therefore can reduce data transmission time in the baseband processing process.

Furthermore, because the data transmission time is reduced in the baseband processing process, a real-time feature of a system is ensured without increasing concurrency of baseband processing units (to reduce computation time in the baseband processing process). Therefore, this embodiment of the present invention can reduce operators' costs.

In addition, according to the method in this embodiment of the present invention, data processing based on a granularity of processing blocks in the baseband processing process not only can reduce an amount of data exchanges between the baseband processing units, but also can lower scheduling complexity.

It should be understood that performing first baseband processing based on a granularity of second processing blocks refers to that the second processing blocks, but not some or multiple second processing blocks in the second processing blocks, are used as a basic data unit in the baseband processing process. In addition, the network node needs to use a unified granularity (the granularity of second processing blocks) to perform data processing in the baseband processing process, but does not change the granularity for processing.

It should also be understood that the second processing blocks are only an expression of data blocks obtained through division according to the data block division manner in this embodiment of the present invention. Data blocks that are obtained through division according to the method in this embodiment of the present invention and applied to a baseband processing process should all fall within the protection scope of this embodiment of the present invention.

Optionally, in one embodiment, a stronger processing capability, of the baseband processing unit, indicated by the capability information of the baseband processing unit indicates larger second processing blocks obtained through division according to the second data block division manner; a larger quantity of space layers indicated by the space layer information indicates smaller second processing blocks obtained through division according to the second data block division manner; and a higher transmission bandwidth indicated by the time-frequency resource information indicates smaller second processing blocks obtained through division according to the second data block division manner.

When the baseband capability information includes multiple pieces in the three pieces of information, the multiple pieces of information may be combined to determine a final data block division manner (the second data block division manner).

For example, the baseband processing unit may be a server, a field programmable gate array (English: Field Programmable Gate Array, FPGA for short), or a digital signal processor (English: Digital Signal processor, DSP for short), or the like. When the baseband processing unit is a general server with a strong capability (such as a server RH2288 with a strong single-core capability), transmission data may be divided into N processing blocks. When the baseband processing unit is an ARM processor (with a weak single-core capability), if sizes of processing blocks are large, a processing speed is relatively slow. In this case, transmission data may be divided into 2N or more processing blocks, so that more data blocks can be concurrently processed. For another example, downlink multi-user MIMO is used an example, when a small quantity of space layers (for example, eight layers) are detected, transmission data may be divided into N processing blocks considering computation complexity. Computation complexity increases when there are many space layers (for example, 16 layers). To reduce processing time, transmission blocks may be divided into 2N small processing blocks for concurrent processing.

For another example, when a bandwidth is 20 MHz (that is, there are many time-frequency resources), it is assumed that transmission blocks are divided into N processing blocks. When a bandwidth is 40 MHz (that is, there are a few time-frequency resources), transmission blocks may be divided into 2N processing blocks for concurrent processing.

When the baseband capability information includes multiple pieces in the three pieces of information, the multiple pieces of information may be comprehensively considered to determine a final division manner. For example, when the baseband processing unit is a general server with a strong capability (such as a server RH2288 with a strong single-core capability), and there are many space layers (for example, 16 layers), transmission data may be divided into M processing blocks, where N≤M≤2N.

If a capability of the baseband processing unit is preferentially considered, M may be set to N. If a quantity of space layers is preferentially considered, M may be set to 2N. Alternatively, if the two pieces of information are comprehensively considered, M may be set to an intermediate value between N to 2N. It should be noted that these examples are provided to help a person skilled in the art better understand this embodiment of the present invention, but not to limit the scope of this embodiment of the present invention. For example, a data block division manner mapping table may be stored in a form of table. When the capability information, the space layer information, and the time-frequency resource information of the baseband processing unit are determined, a quantity of processing blocks obtained through division may be directly found in the mapping table.

It is assumed that A indicates: a CPU quantity is 2, a CPU frequency is 2. 7 GHz, and a quantity of single CPU cores is 8. It is assumed that B indicates: a quantity B of space layers = 8 (1≤ B≤M1, and M1 is a quantity of network-side antennas). It is assumed that C indicates: a transmission bandwidth C=20 MHz (0<C<M2, and M2 is a maximum allocable bandwidth, for example, 20 MHz, 40 MHz, 60 MHz, 80 MHz, or the like). Factors A, B, and C may be comprehensively considered to divide a data block into N processing blocks.

When the three factors A, B, and C respectively change according to coefficients Y1, Y2, and Y3, that is, respectively change to Y1*A, Y2*B, and Y3*C, a data block may be divided into D processing blocks.

D = ceil ((N*X1)/Y1 + (N*X2)*Y2 + (N*X3)*Y2), 1≥X1≥0, 1≥X2≥0, 1≥X3≥0, Y1>0, Y2>0, Y3>0. X1, X2, and X3 indicate weights of the three factors A, B, and C.

In addition to the capability information, the space layer information, and the time-frequency resource information of the baseband processing unit, it should also be understood that the baseband capability information may further include other information, for example, order of a modulation and coding scheme MCS. Any information that affects a data block division manner may be used as the capability information of the baseband processing unit. The foregoing changes should all fall within the protection scope of this embodiment of the present invention.

Optionally, in another embodiment, the first baseband processing includes multiple first processing subprocedures. When the first baseband processing is performed on the second processing blocks based on the granularity of second processing blocks, in the multiple first processing subprocedures, processing is performed on the second processing blocks all based on the granularity of second processing blocks.

Optionally, in another embodiment, the multiple first processing subprocedures include channel coding, scrambling, modulation, and time-frequency resource mapping. In this case, when the first baseband processing is performed on the second processing blocks based on the granularity of second processing blocks, channel coding, scrambling, modulation, and time-frequency resource mapping are performed on the second processing blocks based on the granularity of second processing blocks.

For example, the terminal is a data sender and may first divide the to-be-sent data block into second processing blocks, for example, one or more second processing blocks, according to the second data block division manner. Then, channel coding, scrambling, modulation, and time-frequency resource mapping are separately performed based on the granularity of second processing blocks. It should be understood that channel coding generally includes a cyclic redundancy check, error correction coding, and rate matching.

With reference to FIG. 3, actions performed by the terminal that functions as a data sender in this embodiment of the present invention are described in details below. It should be noted that these examples are provided to help a person skilled in the art better understand this embodiment of the present invention, but not to limit the scope of this embodiment of the present invention.

As shown in FIG. 3, it is assumed that to-be-transmitted data has been divided into M data blocks, for example, transmission blocks TBs. In this embodiment of the present invention, the M data blocks are separately divided into multiple processing blocks (the second processing blocks) according to the second data block division manner. It should be understood that obtaining, through division, the second processing blocks based on already divided data blocks is only one implementation manner of this embodiment of the present invention. The protection scope of this embodiment of the present invention is not limited thereto. For example, when the to-be-transmitted data is obtained, the to-be-transmitted data is directly divided into the second processing blocks according to the second data block division manner.

Then, the second processing blocks are distributed into the baseband processing units for baseband processing. Specifically, as shown in FIG. 3, the baseband processing units separately perform baseband processing on the to-be-transmitted data based on the granularity of second processing blocks. For example, CRC, turbo coding (a type of error correction coding), rate matching RM, scrambling, modulation (for example, quadrature amplitude modulation QAM), and mapping are performed on the second processing blocks. Therefore, CRC needs to be performed on the second processing blocks only once in the baseband processing process, instead of performing two times of CRC: TB CRC and CB CRC.

It should be specially emphasized that an error correction coding manner is not limited in this embodiment of the present invention. turbo coding is only one example of this embodiment of the present invention and the protection scope of this embodiment of the present invention is not limited thereto. For example, the error correction coding manner may be convolution coding, low density parity check code LDPC, or another coding manner.

It should be further specially emphasized that in the modulation process of the second processing blocks, the second processing blocks may use a same or different modulation and coding schemes MCS. That is, the MCS may be determined based on a level of second processing blocks after division, or based on a level of TB.

It should be further specially emphasized that in the mapping process of the second processing blocks, the second processing blocks are used as individual elements and are separately mapped to corresponding time-frequency resource blocks according to a time-frequency resource mapping manner.

The division manner of the second processing blocks and the time-frequency resource mapping manner may be adaptively adjusted according to actual situations, and then delivered to the terminal by means of broadcast, a control channel, or another manner.

In the MIMO scenario, processing such as MIMO BF and inverse fast Fourier transformation IFFT needs to subsequently be performed on the second processing blocks obtained after the baseband processing, to finally transmit the data. The MIMO BF process may be performed based on the granularity of second processing blocks or a granularity smaller than the second processing blocks. This embodiment of the present invention sets no limit thereto.

The technical solution can reduce data exchange by the data sender between the baseband processing units. CRC to QAM modulation shown in FIG. 3 are performed based on the granularity of processing blocks, and data transmission is not required between the baseband processing units. During mapping and MIMO coding of the processing blocks, some data may be transmitted or not transmitted according to the actual system complexity.

For example, when there are a large amount of transmitted data and many flows, MIMO coding may be performed based on a smaller granularity obtained through division, to ensure the real-time feature. Therefore, according to this embodiment of the present invention, an amount of data exchanges in the baseband processing process, transmission time, scheduling complexity, a quantity of baseband processing units (that is, concurrency of the baseband processing units is decreased), and operators' costs are reduced.

Optionally, in another embodiment, when time-frequency resource mapping is performed on the second processing blocks based on the granularity of second processing blocks, each second processing block in the modulated second processing blocks may be separately mapped to a time-frequency resource block according to a time-frequency resource mapping manner.

For example, the terminal may map the processed second processing blocks to time-frequency resource blocks according to a time-frequency resource mapping manner that is pre-agreed with the terminal or one obtained time-frequency resource mapping manner, that is, separately and individually map the second processing blocks to the time-frequency resource blocks. In a scenario in which there is no pre-agreed time-frequency resource mapping manner, the terminal may send the used time-frequency resource mapping manner to the network node. This embodiment of the present invention sets no limit thereto.

Optionally, in another embodiment, the terminal may further receive, from the network node, a first data block division manner, and data that is obtained after the network node performs the first baseband processing based on a granularity of first processing blocks obtained through division according to the first data block division manner. Then, the terminal performs second baseband processing, based on the granularity of first processing blocks, on the data received from the network node.

For example, after determining the first data block division manner used in the downlink communication process, the network node sends the first data block division manner to the terminal, so that the terminal performs, according to the data block division manner, the second baseband processing on the data received from the network node.

It should also be understood that a process in which the terminal performs first baseband processing on data is similar to the process in which the network node performs first baseband processing, and are both used as baseband processing processes that are executed when the terminal or the network node functions as a data sender. Similarly, the second baseband processing process refers to a baseband processing process that is executed when the terminal or the network node functions as a data receiver.

Optionally, in another embodiment, the second baseband processing includes multiple second processing subprocedures. In this case, when the second baseband processing is performed based on the granularity of first processing blocks on the data received from the network node, in the multiple second processing subprocedures, processing is performed all based on the granularity of first processing blocks on the data received from the network node.

Optionally, in another embodiment, the multiple second processing subprocedures include demapping, demodulation, descrambling, and channel decoding. In this case, when the second baseband processing is performed based on the granularity of first processing blocks on the data received from the network node, demapping, demodulation, descrambling, and channel decoding are performed based on the granularity of first processing blocks on the data received from the network node.

For example, the terminal is a data receiver in this case. When the terminal performs baseband processing on transmission data based on the granularity of first processing blocks, the network node may first demap the received transmission data according to the time-frequency resource mapping manner, to obtain the demapped first processing blocks. Then, the terminal processes the demapped first processing blocks based on the granularity of first processing blocks, to obtain the processed first processing blocks. It should be understood that channel decoding generally includes rate dematching, error correction decoding, and a cyclic redundancy check.

With reference to FIG. 4, actions performed by the terminal that functions as a data receiver are described in details below. It should be noted that these examples are provided to help a person skilled in the art better understand this embodiment of the present invention, but not to limit the scope of this embodiment of the present invention.

As shown in FIG. 4, the terminal first demaps the processing blocks (the first processing blocks) after receiving data. Specifically, the action of demapping the first processing blocks is performed before QAM demodulation is performed on the first processing blocks. As shown in FIG. 4, after receiving the data, the terminal first removes a cyclic prefix CP, and then performs fast Fourier transform FFT.

Then, the terminal performs, according to parsed control information and the time-frequency resource mapping manner, channel separation and channel estimation CE on frequency domain data that is obtained after FFT is performed. That is, during channel separation, the terminal demaps the first processing blocks according to the time-frequency resource mapping manner. Specially, in the MIMO scenario, the terminal further needs to perform MIMO decoding (that is, DE_MIMO) after channel separation. For example, the terminal distributes, based on the granularity of first processing blocks or a smaller granularity (when there are many antennas and flows), data obtained after channel separation to the baseband processing units to perform MIMO decoding.

Then, the baseband processing units separately perform, based on the granularity of first processing blocks, baseband processing on data on which MIMO decoding is to be performed. For example, demodulation, descrambling, rate dematching, turbo decoding (a type of error correction decoding), and CRC are performed on the first processing blocks. Finally, the first processing blocks are aggregated into a complete TB.

The division manner of the first processing blocks and the time-frequency resource mapping manner may be adaptively adjusted according to actual situations, and then delivered to the terminal by means of broadcast, a control channel, or another manner.

The technical solution can reduce data exchange by the data sender between the baseband processing units. CRC to demodulation shown in FIG. 4 are performed based on the granularity of processing blocks, and data transmission is not required between the baseband processing units. During mapping and MIMO coding of the processing blocks, some data may be transmitted or not transmitted according to the actual system complexity. For example, when there are a large amount of transmitted data and many flows, MIMO coding may be performed based on a smaller granularity obtained through division, to ensure the real-time feature.

Therefore, according to this embodiment of the present invention, an amount of data exchanges in the baseband processing process, transmission time, scheduling complexity, a quantity of baseband processing units (that is, concurrency of the baseband processing units is decreased), and operators' costs are reduced.

Optionally, in another embodiment, the first baseband processing includes multiple-input multiple-output beamforming MIMO BF coding, and the second baseband processing includes MIMO BF decoding. In this case, when the second baseband processing is performed on the second processing blocks based on the granularity of second processing blocks, channel coding, scrambling, modulation, time-frequency resource mapping, and MIMO BF coding may be performed on the second processing blocks based on the granularity of second processing blocks. When the second baseband processing is performed based on the granularity of first processing blocks on the data received from the network node, MIMO BF decoding, demapping, demodulation, descrambling, and channel decoding are performed based on the granularity of first processing blocks on the data received from the network node.

Optionally, in another embodiment, the capability information of the baseband processing unit includes at least one piece of: capability information of a baseband processing unit of the network node, or capability information of a baseband processing unit of the terminal.

Therefore, the network node may better adapt to actual requirements when determining a data block division manner, to further improve baseband processing performance.

For example, in a downlink single-user MIMO (SU-MIMO) scenario, UE has many receive antennas, and there are many flows to be processed. Therefore, computation complexity is high. In this case, the capability information of the baseband processing unit may include capability information of a baseband processing unit of the UE. The network node may obtain the capability information of the baseband processing unit of the UE from the UE in advance.

In a downlink multi-user MIMO (MU-MIMO) scenario, UE has a few antennas, and there are a few flows to be processed. Therefore, computation complexity is low. In this case, a relatively small amount of data is transmitted, and the capability information of the baseband processing unit may not include capability information of a baseband processing unit of the UE. For the two scenarios SU-MIMO and MU-MIMO, processing complexity of the network node is high, and the capability information of the baseband processing unit may include the capability information of the baseband processing unit of the network node.

For another example, in an uplink MU-MIMO scenario, the network node is a receiver and a decoding process is complex. The capability information of the baseband processing unit may include the capability information of the baseband processing unit of the network node. While a processing procedure of the UE is a simpler and the capability information of the baseband processing unit may not include the capability information of the baseband processing unit of the UE.

Optionally, in another embodiment, the time-frequency resource mapping manner includes a block orthogonal time-frequency resource mapping manner or a discrete orthogonal time-frequency resource mapping manner

As shown in FIG. 5, the part A shows a licensed time-frequency resource in this embodiment of the present invention. The part B shows that the time-frequency resource is divided into N time-frequency resource subblocks in a frequency domain orthogonal manner, and each processing block is mapped to a time-frequency resource subblock. The part C shows that the time-frequency resource is divided into N time-frequency resource subblocks in a time domain and frequency domain orthogonal manner, and each processing block is mapped to a time-frequency resource subblock. The part D shows that the time-frequency resource is divided into (2xN) time-frequency resource subblocks in a time domain and frequency domain orthogonal manner, and each processing block is mapped to two discretely located time-frequency resource subblocks (two time-frequency resource subblocks shown by using a same number). In a specific scenario, mapping according to the time-frequency resource mapping manner corresponding to the part D has a good anti-interference capability.

Under normal circumstances, the block orthogonal time-frequency resource mapping manner is used. When complexity is acceptable, to improve decoding performance, the discrete orthogonal time-frequency resource mapping manner may be used to distribute data into different time-frequency resources. For example, when the terminal side has a relatively poor channel in a time period and in a frequency band. To improve decoding performance, data may be distributed at different time-frequency locations. This can improve the anti-interference capability.

Optionally, in another embodiment, when sending the data block division manner to the terminal, the network node may send the data block division manner to the terminal by using a broadcast channel or a control channel.

For example, the network node may periodically broadcast the data block division manner by using the broadcast channel, or periodically send the data block division manner to the terminal by using the control channel. In a scenario in which the network node needs to send its used time-frequency resource mapping manner to the terminal, the network node may send the time-frequency resource mapping manner and the data block division manner together to the terminal.

Specifically, the data block division manner and the time-frequency resource mapping manner may be indicated by a string of bits bits (assuming that X bits and X is a positive integer). Different values indicated by the X bits correspond to different processing block division manners and time-frequency resource mapping manners. Correspondingly, a mapping table (table) may be saved at each of the network node side and the UE side. After receiving the string of bits, the UE searches in the table and finds a specific processing block division manner and a mapping manner.

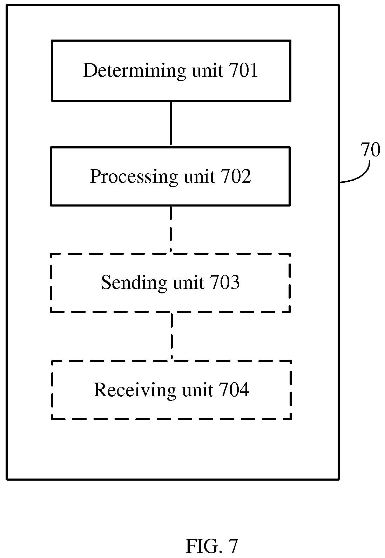

FIG. 7 is a schematic diagram of a structure of a network node according to an embodiment of the present invention. The network node 70 shown in FIG. 7 includes a determining unit 701 and a processing unit 702. For example, the network node 70 may be the base station 102 shown in FIG. 1.

The determining unit 701 is configured to determine a first data block division manner according to first baseband capability information, wherein the first baseband capability information includes at least one piece of: capability information, space layer information, or time-frequency resource information of a baseband processing unit.

For example, the capability information of the baseband processing unit indicates a strong or weak processing capability of the baseband processing unit, the space layer information indicates a quantity of space layers, and the time-frequency resource information indicates a high or low transmission bandwidth. The currently used first data block division manner may be determined by using one or more pieces of the three pieces of information, to obtain a granularity of data blocks that are used in a subsequent baseband processing process.

It should be understood that the three pieces of information (the capability information, the space layer information, and the time-frequency resource information of the baseband processing unit) indicate baseband capability information of a current system. For example, when the baseband capability information of the system changes, the changed baseband capability information is used as the first baseband capability information. The first data block division manner that is determined according to the first baseband capability information may be used in a downlink communication process.

The processing unit 702 is configured to divide a to-be-sent data block into first processing blocks according to the first data block division manner, and perform first baseband processing on the first processing blocks based on a granularity of first processing blocks.

For example, the network node is a data sender and may first divide the to-be-sent data block into first processing blocks, for example, one or more first processing blocks, according to the first data block division manner. Then, the network node performs processing on the first processing blocks based on the granularity of first processing blocks, instead of performing processing based on multiple granularities in a baseband processing process.

Based on the technical solutions, a data block division manner is first determined according to baseband capability information in the embodiments of the present invention. Then, a data block is divided into processing blocks according to the data block division manner. In this way, in a baseband processing process, data processing based on a granularity of processing blocks can reduce data exchange involved in data distribution and aggregation between baseband processing units, and therefore can reduce data transmission time in the baseband processing process.

Furthermore, because the data transmission time is reduced in the baseband processing process, a real-time feature of a system is ensured without increasing concurrency of baseband processing units (to reduce computation time in the baseband processing process). Therefore, this embodiment of the present invention can reduce operators' costs.

In addition, according to the method in this embodiment of the present invention, data processing based on a granularity of processing blocks in the baseband processing process not only can reduce an amount of data exchanges between the baseband processing units, but also can lower scheduling complexity.

It should be understood that performing first baseband processing based on a granularity of first processing blocks refers to that the first processing blocks, but not some or multiple first processing blocks in the first processing blocks, are used as a basic data unit in the baseband processing process. In addition, the network node needs to use a unified granularity (the granularity of first processing blocks) to perform data processing in the baseband processing process, but does not change the granularity for processing.

It should also be understood that the first processing blocks are only an expression of data blocks obtained through division according to the data block division manner in this embodiment of the present invention. Data blocks that are obtained through division according to the method in this embodiment of the present invention and applied to a baseband processing process should all fall within the protection scope of this embodiment of the present invention.

Optionally, in one embodiment, a stronger processing capability, of the baseband processing unit, indicated by the capability information of the baseband processing unit indicates larger first processing blocks obtained through division according to the first data block division manner; a larger quantity of space layers indicated by the space layer information indicates smaller first processing blocks obtained through division according to the first data block division manner; and a higher transmission bandwidth indicated by the time-frequency resource information indicates smaller first processing blocks obtained through division according to the first data block division manner.

When the baseband capability information includes multiple pieces in the three pieces of information, the multiple pieces of information may be combined to determine a final data block division manner (the first data block division manner).

For example, the baseband processing unit may be a server, a field programmable gate array (English: Field Programmable Gate Array, FPGA for short), or a digital signal processor (English: Digital Signal processor, DSP for short), or the like. When the baseband processing unit is a general server with a strong capability (such as a server RH2288 with a strong single-core capability), transmission data may be divided into N processing blocks. When the baseband processing unit is an ARM processor (with a weak single-core capability), if sizes of processing blocks are large, a processing speed is relatively slow. In this case, transmission data may be divided into 2N or more processing blocks, so that more data blocks can be concurrently processed.

For another example, downlink multi-user MIMO is used an example, when a small quantity of space layers (for example, eight layers) are detected, transmission data may be divided into N processing blocks considering computation complexity. Computation complexity increases when there are many space layers (for example, 16 layers). To reduce processing time, transmission blocks may be divided into 2N small processing blocks for concurrent processing. For another example, when a bandwidth is 20 MHz (that is, there are many time-frequency resources), it is assumed that transmission blocks are divided into N processing blocks. When a bandwidth is 40 MHz (that is, there are a few time-frequency resources), transmission blocks may be divided into 2N processing blocks for concurrent processing.

When the baseband capability information includes multiple pieces in the three pieces of information, the multiple pieces of information may be comprehensively considered to determine a final division manner. For example, when the baseband processing unit is a general server with a strong capability (such as a server RH2288 with a strong single-core capability), and there are many space layers (for example, 16 layers), transmission data may be divided into M processing blocks, where N≤M≤2N.

If a capability of the baseband processing unit is preferentially considered, M may be set to N. If a quantity of space layers is preferentially considered, M may be set to 2N. Alternatively, if the two pieces of information are comprehensively considered, M may be set to an intermediate value between N to 2N. It should be noted that these examples are provided to help a person skilled in the art better understand this embodiment of the present invention, but not to limit the scope of this embodiment of the present invention. For example, a data block division manner mapping table may be stored in a form of table. When the capability information, the space layer information, and the time-frequency resource information of the baseband processing unit are determined, a quantity of processing blocks obtained through division may be directly found in the mapping table.

It is assumed that A indicates: a CPU quantity is 2, a CPU frequency is 2. 7 GHz, and a quantity of single CPU cores is 8. It is assumed that B indicates: a quantity B of space layers = 8 (1≤ B≤M1, and M1 is a quantity of network-side antennas). It is assumed that C indicates: a transmission bandwidth C=20 MHz (0<C<M2, and M2 is a maximum allocable bandwidth, for example, 20 MHz, 40 MHz, 60 MHz, 80 MHz, or the like). Factors A, B, and C may be comprehensively considered to divide a data block into N processing blocks.

When the three factors A, B, and C respectively change according to coefficients Y1, Y2, and Y3, that is, respectively change to Y1*A, Y2*B, and Y3*C, a data block may be divided into D processing blocks.

D = ceil ((N*X1)/Y1 + (N*X2)*Y2 + (N*X3)*Y2), 1≥X1≥0, 1≥X2≥0, 1≥X3≥0, Y1>0, Y2>0, Y3>0. X1, X2, and X3 indicate weights of the three factors A, B, and C.

In addition to the capability information, the space layer information, and the time-frequency resource information of the baseband processing unit, it should also be understood that the baseband capability information may further include other information, for example, order of a modulation and coding scheme (English: Modulation and Coding Scheme, MCS for short). Any information that affects a data block division manner may be used as the capability information of the baseband processing unit. The foregoing changes should all fall within the protection scope of this embodiment of the present invention.

Optionally, in another embodiment, the first baseband processing includes multiple first processing subprocedures, and the processing unit 702 is specifically configured to, in the multiple first processing subprocedures, perform processing on the first processing blocks all based on the granularity of first processing blocks.

Optionally, in another embodiment, the multiple first processing subprocedures include channel coding, scrambling, modulation, and time-frequency resource mapping, and the processing unit 702 is specifically configured to perform channel coding, scrambling, modulation, and time-frequency resource mapping on the first processing blocks based on the granularity of first processing blocks.

For example, the network node is a data sender and may first divide the to-be-sent data block into first processing blocks, for example, one or more first processing blocks, according to the first data block division manner. Then, channel coding, scrambling, modulation, and time-frequency resource mapping are separately performed based on the granularity of first processing blocks. It should be understood that channel coding generally includes a cyclic redundancy check, error correction coding, and rate matching.

FIG. 3 is a schematic flowchart of a baseband processing process according to an embodiment of the present invention. With reference to FIG. 3, actions performed by the network node that functions as a data sender in this embodiment of the present invention are described in details below. It should be noted that these examples are provided to help a person skilled in the art better understand this embodiment of the present invention, but not to limit the scope of this embodiment of the present invention.

In a multiple-input multiple-output (English: Multiple Input Multiple Output, MIMO for short) scenario shown in FIG. 3, a system architecture is generally complex, and therefore multiple concurrent baseband processing units are set for the system to perform data processing. The method in this embodiment of the present invention can reduce data transmission between the baseband processing units.

As shown in FIG. 3, it is assumed that to-be-transmitted data has been divided into M data blocks, for example, transmission blocks TBs. In this embodiment of the present invention, the M data blocks are separately divided into multiple first processing blocks according to the first data block division manner. It should be understood that obtaining, through division, the first processing blocks based on already divided data blocks is only one implementation manner of this embodiment of the present invention. The protection scope of this embodiment of the present invention is not limited thereto. For example, when the to-be-transmitted data is obtained, the to-be-transmitted data is directly divided into the first processing blocks according to the first data block division manner.

Then, the first processing blocks are distributed into the baseband processing units for baseband processing. Specifically, as shown in FIG. 3, the baseband processing units separately perform baseband processing on the to-be-transmitted data based on the granularity of first processing blocks. For example, CRC, turbo coding (a type of error correction coding), rate matching (English: Rate Matching, RM for short), scrambling, modulation (for example, quadrature amplitude modulation (English: Quadrature Amplitude Modulation, QAM for short)), and mapping are performed on the first processing blocks. Therefore, CRC needs to be performed on the first processing blocks only once in the baseband processing process, instead of performing two times of CRC: TB CRC and CB CRC.

It should be specially emphasized that an error correction coding manner is not limited in this embodiment of the present invention. turbo coding is only one example of this embodiment of the present invention and the protection scope of this embodiment of the present invention is not limited thereto. For example, the error correction coding manner may be convolution coding, low density parity check code (English: low density parity check code, LDPC for short), or another coding manner.

It should be further specially emphasized that in the modulation process of the first processing blocks, the first processing blocks may use a same or different modulation and coding schemes MCS. That is, the MCS may be determined based on a level of first processing blocks after division, or based on a level of TB.

It should be further specially emphasized that in the mapping process of the first processing blocks, the first processing blocks are used as individual elements and are separately mapped to corresponding time-frequency resource blocks according to a time-frequency resource mapping manner.

The division manner of the first processing blocks and the time-frequency resource mapping manner may be adaptively adjusted according to actual situations, and then delivered to a terminal by means of broadcast, a control channel, or another manner.

In the MIMO scenario, processing such as MIMO beamforming (English: Beam Forming, BF for short) and inverse fast Fourier transformation (English: Inverse Fast Fourier Transform, IFFT for short) needs to subsequently be performed on the first processing blocks obtained after the baseband processing, to finally transmit the data. The MIMO BF process may be performed based on the granularity of processing blocks or a granularity smaller than the processing blocks. This embodiment of the present invention sets no limit thereto.

The technical solution can reduce data exchange by the data sender between the baseband processing units. CRC to QAM modulation shown in FIG. 3 are performed based on the granularity of processing blocks, and data transmission is not required between the baseband processing units. During mapping and MIMO coding of the processing blocks, some data may be transmitted or not transmitted according to the actual system complexity.

For example, when there are a large amount of transmitted data and many flows, MIMO coding may be performed based on a smaller granularity obtained through division, to ensure the real-time feature. Therefore, according to this embodiment of the present invention, an amount of data exchanges in the baseband processing process, transmission time, scheduling complexity, a quantity of baseband processing units (that is, concurrency of the baseband processing units is decreased), and operators' costs are reduced.

Optionally, in another embodiment, the processing unit 702 is specifically configured to separately map each first processing block in the modulated first processing blocks to a time-frequency resource block according to a time-frequency resource mapping manner.

For example, the network node may map the processed first processing blocks to time-frequency resource blocks according to a time-frequency resource mapping manner that is pre-agreed with the terminal or one obtained time-frequency resource mapping manner, that is, separately and individually map the first processing blocks to the time-frequency resource blocks. In a scenario in which there is no pre-agreed time-frequency resource mapping manner, the network node may send the used time-frequency resource mapping manner to the terminal. This embodiment of the present invention sets no limit thereto.

Optionally, in another embodiment, the network node may further include a sending unit 703 and a receiving unit 704. The determining unit 701 is further configured to determine a second data block division manner according to second baseband capability information, where the second baseband capability information includes at least one piece of: the capability information, the space layer information, or the time-frequency resource information of the baseband processing unit. The sending unit 703 is configured to send the second data block division manner to the terminal. The receiving unit 704 is configured to receive, from the terminal, data that is obtained after the terminal performs the first baseband processing based on a granularity of second processing blocks obtained through division according to the second data block division manner. In this case, the processing unit 702 is further configured to perform second baseband processing, based on the granularity of second processing blocks, on the data received from the terminal.

It should be understood that the three pieces of information included in the second baseband capability information indicate the baseband capability information of the current system. For example, when the baseband capability information of the system changes, the changed baseband capability information is used as the second baseband capability information. The second data block division manner that is determined according to the second baseband capability information may be used in an uplink communication process. The second baseband capability information may be the same as or different from the first baseband capability information. This embodiment of the present invention sets no limit thereto. The second data block division manner may be the same as or different from the second baseband capability information. This embodiment of the present invention sets no limit thereto.

It should also be understood that a process in which the terminal performs first baseband processing on data is similar to the process in which the network node performs first baseband processing, and are both used as baseband processing processes that are executed when the terminal or the network node functions as a data sender. Similarly, the second baseband processing process refers to a baseband processing process that is executed when the terminal or the network node functions as a data receiver.

For example, after determining the second data block division manner used in the uplink communication process, the network node sends the second data block division manner to the terminal, so that the terminal performs, according to the second data block division manner, baseband processing on data to be sent to the network node. Then, the network node receives, from the terminal, data that is obtained after the terminal performs the first baseband processing based on the granularity of second processing blocks, and performs the second baseband processing based on the granularity of second processing blocks.

Optionally, in another embodiment, the second baseband processing includes multiple second processing subprocedures. The processing unit 702 is specifically configured to, in the multiple second processing subprocedures, perform processing, all based on the granularity of second processing blocks, on the data received from the terminal.

Optionally, in another embodiment, the multiple second processing subprocedures include demapping, demodulation, descrambling, and channel decoding. In this case, the processing unit 702 is specifically configured to perform demapping, demodulation, descrambling, and channel decoding, based on the granularity of second processing blocks, on the data received from the terminal.

For example, the network node is a data receiver in this case. When the network node performs baseband processing on transmission data based on the granularity of second processing blocks, the network node may first demap the received transmission data according to the time-frequency resource mapping manner, to obtain the demapped second processing blocks. Then, the network node processes the demapped second processing blocks based on the granularity of second processing blocks, to obtain the processed second processing blocks. It should be understood that channel decoding generally includes rate dematching, error correction decoding, and a cyclic redundancy check.

With reference to FIG. 4, actions performed by the network node that functions as a data receiver are described in details below. It should be noted that these examples are provided to help a person skilled in the art better understand this embodiment of the present invention, but not to limit the scope of this embodiment of the present invention.

As shown in FIG. 4, the network node first demaps the second processing blocks after receiving data. Specifically, the action of demapping the second processing blocks is performed before QAM demodulation is performed on the second processing blocks. As shown in FIG. 4, after receiving the data, the network node first removes a cyclic prefix CP, and then performs fast Fourier transform FFT.

Then, the network node performs, according to parsed control information and the time-frequency resource mapping manner, channel separation and channel estimation CE on frequency domain data that is obtained after FFT is performed. That is, during channel separation, the network node demaps the second processing blocks according to the time-frequency resource mapping manner. Specially, in the MIMO scenario, the terminal further needs to perform MIMO decoding (that is, DE_MIMO) after channel separation. For example, the network node distributes, based on the granularity of second processing blocks or a smaller granularity (when there are many antennas and flows), data obtained after channel separation to the baseband processing units to perform MIMO decoding.

Then, the baseband processing units separately perform, based on the granularity of second processing blocks, baseband processing on data on which MIMO decoding is to be performed. For example, demodulation, descrambling, rate dematching, turbo decoding (a type of error correction decoding), and CRC are performed on the second processing blocks. Finally, the second processing blocks are aggregated into a complete TB.

The division manner of the second processing blocks and the time-frequency resource mapping manner may be adaptively adjusted according to actual situations, and then delivered to the terminal by means of broadcast, a control channel, or another manner.

The technical solution can reduce data exchange by the data sender between the baseband processing units. CRC to demodulation shown in FIG. 4 are performed based on the granularity of second processing blocks, and data transmission is not required between the baseband processing units. During mapping and MIMO coding of the second processing blocks, some data may be transmitted or not transmitted according to the actual system complexity. For example, when there are a large amount of transmitted data and many flows, MIMO coding may be performed based on a smaller granularity obtained through division, to ensure the real-time feature.

Therefore, according to this embodiment of the present invention, an amount of data exchanges in the baseband processing process, transmission time, scheduling complexity, a quantity of baseband processing units (that is, concurrency of the baseband processing units is decreased), and operators' costs are reduced.

Optionally, in another embodiment, the first baseband processing includes multiple-input multiple-output beamforming MIMO BF coding, and the second baseband processing includes MIMO BF decoding.

The processing unit 702 is specifically configured to perform channel coding, scrambling, modulation, time-frequency resource mapping, and MIMO BF coding on the first processing blocks based on the granularity of first processing blocks; and perform MIMO BF decoding, demapping, demodulation, descrambling, and channel decoding, based on the granularity of second processing blocks, on the data received from the terminal.

Optionally, in another embodiment, the capability information of the baseband processing unit includes at least one piece of: capability information of a baseband processing unit of the network node, or capability information of a baseband processing unit of the terminal.

Therefore, the network node may better adapt to actual requirements when determining a data block division manner, to further improve baseband processing performance.

For example, in a downlink single-user MIMO (SU-MIMO) scenario, UE has many receive antennas, and there are many flows to be processed. Therefore, computation complexity is high. In this case, the capability information of the baseband processing unit may include capability information of a baseband processing unit of the UE. The network node may obtain the capability information of the baseband processing unit of the UE from the UE in advance.

In a downlink multi-user MIMO (MU-MIMO) scenario, UE has a few antennas, and there are a few flows to be processed. Therefore, computation complexity is low. In this case, a relatively small amount of data is transmitted, and the capability information of the baseband processing unit may not include capability information of a baseband processing unit of the UE. For the two scenarios SU-MIMO and MU-MIMO, processing complexity of the network node is high, and the capability information of the baseband processing unit may include the capability information of the baseband processing unit of the network node.

For another example, in an uplink MU-MIMO scenario, the network node is a receiver and a decoding process is complex. The capability information of the baseband processing unit may include the capability information of the baseband processing unit of the network node. While a processing procedure of the UE is simpler and the capability information of the baseband processing unit may not include the capability information of the baseband processing unit of the UE.

Optionally, in another embodiment, the time-frequency resource mapping manner includes a block orthogonal time-frequency resource mapping manner or a discrete orthogonal time-frequency resource mapping manner.

As shown in FIG. 5, the part A shows a licensed time-frequency resource in this embodiment of the present invention. The part B shows that the time-frequency resource is divided into N time-frequency resource subblocks in a frequency domain orthogonal manner, and each processing block is mapped to a time-frequency resource subblock. The part C shows that the time-frequency resource is divided into N time-frequency resource subblocks in a time domain and frequency domain orthogonal manner, and each processing block is mapped to a time-frequency resource subblock. The part D shows that the time-frequency resource is divided into (2xN) time-frequency resource subblocks in a time domain and frequency domain orthogonal manner, and each processing block is mapped to two discretely located time-frequency resource subblocks (two time-frequency resource subblocks shown by using a same number). In a specific scenario, mapping according to the time-frequency resource mapping manner corresponding to the part D has a good anti-interference capability.

Under normal circumstances, the block orthogonal time-frequency resource mapping manner is used. When complexity is acceptable, to improve decoding performance, the discrete orthogonal time-frequency resource mapping manner may be used to distribute data into different time-frequency resources. For example, when the terminal side has a relatively poor channel in a time period and in a frequency band. To improve decoding performance, data may be distributed at different time-frequency locations. This can improve the anti-interference capability.

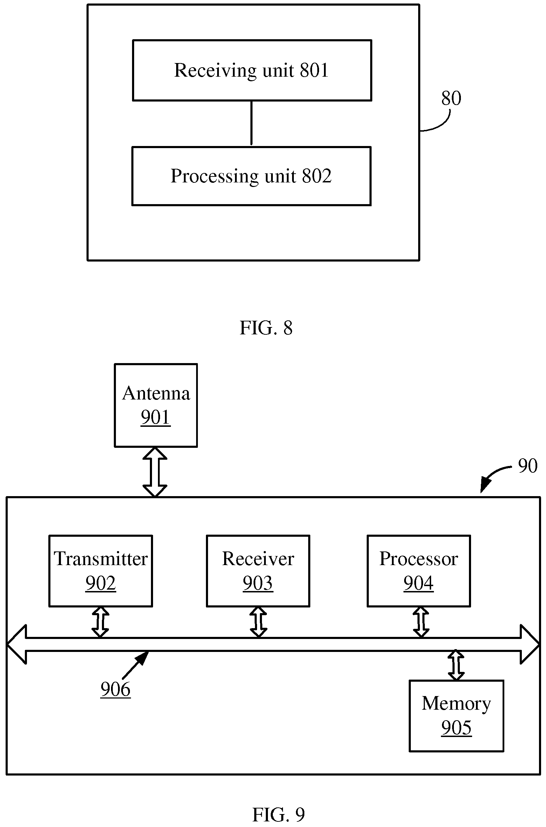

FIG. 8 is a schematic block diagram of a terminal according to an embodiment of the present invention. The terminal 80 shown in FIG. 8 includes a receiving unit 801 and a processing unit 802. For example, the terminal 80 may be the access terminal 116 or 122 shown in FIG. 1.

The receiving unit 801 is configured to receive a second data block division manner from a network node, where the second data block division manner is determined by the network node according to second baseband capability information, and the second baseband capability information includes at least one piece of: capability information, space layer information, or time-frequency resource information of a baseband processing unit.

For example, the capability information of the baseband processing unit indicates a strong or weak processing capability of the baseband processing unit, the space layer information indicates a quantity of space layers, and the time-frequency resource information indicates a high or low transmission bandwidth. The network node may determine the currently used second data block division manner by using one or more pieces of the three pieces of information, to obtain a granularity of data blocks that are used in a subsequent baseband processing process. Then, the network node sends the second data block division manner to the terminal.

It should be understood that the three pieces of information (the capability information, the space layer information, and the time-frequency resource information of the baseband processing unit) indicate baseband capability information of a current system. For example, when the baseband capability information of the system changes, the changed baseband capability information is used as the first baseband capability information. The first data block division manner that is determined according to the first baseband capability information may be used in an uplink communication process.

The processing unit 802 is configured to divide a to-be-sent data block into second processing blocks according to the second data block division manner, and perform first baseband processing on the second processing blocks based on a granularity of second processing blocks.

For example, the terminal is a data sender and may first divide the to-be-sent data block into second processing blocks, for example, one or more second processing blocks, according to the second data block division manner. Then, the network node performs processing on the to-be-divided and to-be-sent data blocks based on the granularity of second processing blocks, instead of performing processing based on multiple granularities in a baseband processing process.

Based on the technical solutions, a data block division manner is first determined according to baseband capability information in the embodiments of the present invention. Then, a data block is divided into processing blocks according to the data block division manner. In this way, in a baseband processing process, data processing based on a granularity of processing blocks can reduce data exchange involved in data distribution and aggregation between baseband processing units, and therefore can reduce data transmission time in the baseband processing process.

Furthermore, because the data transmission time is reduced in the baseband processing process, a real-time feature of a system is ensured without increasing concurrency of baseband processing units (to reduce computation time in the baseband processing process). Therefore, this embodiment of the present invention can reduce operators' costs.

In addition, according to the method in this embodiment of the present invention, data processing based on a granularity of processing blocks in the baseband processing process not only can reduce an amount of data exchanges between the baseband processing units, but also can lower scheduling complexity.

It should be understood that performing first baseband processing based on a granularity of second processing blocks refers to that the second processing blocks, but not some or multiple second processing blocks in the second processing blocks, are used as a basic data unit in the baseband processing process. In addition, the network node needs to use a unified granularity (the granularity of second processing blocks) to perform data processing in the baseband processing process, but does not change the granularity for processing.

It should also be understood that the second processing blocks are only an expression of data blocks obtained through division according to the data block division manner in this embodiment of the present invention. Data blocks that are obtained through division according to the method in this embodiment of the present invention and applied to a baseband processing process should all fall within the protection scope of this embodiment of the present invention.

Optionally, in one embodiment, a stronger processing capability, of the baseband processing unit, indicated by the capability information of the baseband processing unit indicates larger second processing blocks obtained through division according to the second data block division manner; a larger quantity of space layers indicated by the space layer information indicates smaller second processing blocks obtained through division according to the second data block division manner; and a higher transmission bandwidth indicated by the time-frequency resource information indicates smaller second processing blocks obtained through division according to the second data block division manner.

When the baseband capability information includes multiple pieces in the three pieces of information, the multiple pieces of information may be combined to determine a final data block division manner (the second data block division manner).

For example, the baseband processing unit may be a server, a field programmable gate array (English: Field Programmable Gate Array, FPGA for short), or a digital signal processor (English: Digital Signal processor, DSP for short), or the like. When the baseband processing unit is a general server with a strong capability (such as a server RH2288 with a strong single-core capability), transmission data may be divided into N processing blocks. When the baseband processing unit is an ARM processor (with a weak single-core capability), if sizes of processing blocks are large, a processing speed is relatively slow. In this case, transmission data may be divided into 2N or more processing blocks, so that more data blocks can be concurrently processed.

For another example, downlink multi-user MIMO is used an example, when a small quantity of space layers (for example, eight layers) are detected, transmission data may be divided into N processing blocks considering computation complexity. Computation complexity increases when there are many space layers (for example, 16 layers). To reduce processing time, transmission blocks may be divided into 2N small processing blocks for concurrent processing. For another example, when a bandwidth is 20 MHz (that is, there are many time-frequency resources), it is assumed that transmission blocks are divided into N processing blocks. When a bandwidth is 40 MHz (that is, there are a few time-frequency resources), transmission blocks may be divided into 2N processing blocks for concurrent processing.

When the baseband capability information includes multiple pieces in the three pieces of information, the multiple pieces of information may be comprehensively considered to determine a final division manner. For example, when the baseband processing unit is a general server with a strong capability (such as a server RH2288 with a strong single-core capability), and there are many space layers (for example, 16 layers), transmission data may be divided into M processing blocks, where N≤M≤2N.

If a capability of the baseband processing unit is preferentially considered, M may be set to N. If a quantity of space layers is preferentially considered, M may be set to 2N. Alternatively, if the two pieces of information are comprehensively considered, M may be set to an intermediate value between N to 2N. It should be noted that these examples are provided to help a person skilled in the art better understand this embodiment of the present invention, but not to limit the scope of this embodiment of the present invention. For example, a data block division manner mapping table may be stored in a form of table. When the capability information, the space layer information, and the time-frequency resource information of the baseband processing unit are determined, a quantity of processing blocks obtained through division may be directly found in the mapping table.

It is assumed that A indicates: a CPU quantity is 2, a CPU frequency is 2. 7 GHz, and a quantity of single CPU cores is 8. It is assumed that B indicates: a quantity B of space layers = 8 (1≤ B≤M1, and M1 is a quantity of network-side antennas). It is assumed that C indicates: a transmission bandwidth C=20 MHz (0<C<M2, and M2 is a maximum allocable bandwidth, for example, 20 MHz, 40 MHz, 60 MHz, 80 MHz, or the like). Factors A, B, and C may be comprehensively considered to divide a data block into N processing blocks.

When the three factors A, B, and C respectively change according to coefficients Y1, Y2, and Y3, that is, respectively change to Y1*A, Y2*B, and Y3*C, a data block may be divided into D processing blocks.

D = ceil ((N*X1)/Y1 + (N*X2)*Y2 + (N*X3)*Y2), 1≥X1≥0, 1≥X2≥0, 1≥X3≥0, Y1≥0, Y2>0, Y3>0. X1, X2, and X3 indicate weights of the three factors A, B, and C.

In addition to the capability information, the space layer information, and the time-frequency resource information of the baseband processing unit, it should also be understood that the baseband capability information may further include other information, for example, order of a modulation and coding scheme (English: Modulation and Coding Scheme, MCS for short). Any information that affects a data block division manner may be used as the capability information of the baseband processing unit. The foregoing changes should all fall within the protection scope of this embodiment of the present invention.

Optionally, in another embodiment, the first baseband processing includes multiple first processing subprocedures, and the processing unit 802 is specifically configured to, in the multiple first processing subprocedures, perform processing on the second processing blocks all based on the granularity of second processing blocks.

Optionally, in another embodiment, the multiple first processing subprocedures include channel coding, scrambling, modulation, and time-frequency resource mapping, and the processing unit 802 is specifically configured to perform channel coding, scrambling, modulation, and time-frequency resource mapping on the second processing blocks based on the granularity of second processing blocks.

For example, the terminal is a data sender and may first divide the to-be-sent data block into second processing blocks, for example, one or more second processing blocks, according to the second data block division manner. Then, channel coding, scrambling, modulation, and time-frequency resource mapping are separately performed based on the granularity of second processing blocks. It should be understood that channel coding generally includes a cyclic redundancy check, error correction coding, and rate matching.

With reference to FIG. 3, actions performed by the terminal that functions as a data sender in this embodiment of the present invention are described in details below. It should be noted that these examples are provided to help a person skilled in the art better understand this embodiment of the present invention, but not to limit the scope of this embodiment of the present invention.

As shown in FIG. 3, it is assumed that to-be-transmitted data has been divided into M data blocks, for example, transmission blocks TBs. In this embodiment of the present invention, the M data blocks are separately divided into multiple second processing blocks according to the second data block division manner. It should be understood that obtaining, through division, the second processing blocks based on already divided data blocks is only one implementation manner of this embodiment of the present invention. The protection scope of this embodiment of the present invention is not limited thereto. For example, when the to-be-transmitted data is obtained, the to-be-transmitted data is directly divided into the second processing blocks according to the second data block division manner.

Then, the second processing blocks are distributed into the baseband processing units for baseband processing. Specifically, as shown in FIG. 3, the baseband processing units separately perform baseband processing on the to-be-transmitted data based on the granularity of second processing blocks. For example, CRC, turbo coding (a type of error correction coding), rate matching RM, scrambling, modulation (for example, quadrature amplitude modulation QAM), and mapping are performed on the second processing blocks. Therefore, CRC needs to be performed on the second processing blocks only once in the baseband processing process, instead of performing two times of CRC: TB CRC and CB CRC.

It should be specially emphasized that an error correction coding manner is not limited in this embodiment of the present invention. turbo coding is only one example of this embodiment of the present invention and the protection scope of this embodiment of the present invention is not limited thereto. For example, the error correction coding manner may be convolution coding, low density parity check code LDPC, or another coding manner.

It should be further specially emphasized that in the modulation process of the second processing blocks, the second processing blocks may use a same or different modulation and coding schemes MCS. That is, the MCS may be determined based on a level of second processing blocks after division, or based on a level of TB.

It should be further specially emphasized that in the mapping process of the second processing blocks, the second processing blocks are used as individual elements and are separately mapped to corresponding time-frequency resource blocks according to a time-frequency resource mapping manner.

The division manner of the second processing blocks and the time-frequency resource mapping manner may be adaptively adjusted according to actual situations, and then delivered to the terminal by means of broadcast, a control channel, or another manner.

In the MIMO scenario, processing such as MIMO BF and inverse fast Fourier transformation IFFT needs to subsequently be performed on the second processing blocks obtained after the baseband processing, to finally transmit the data. The MIMO BF process may be performed based on the granularity of second processing blocks or a granularity smaller than the second processing blocks. This embodiment of the present invention sets no limit thereto.

The technical solution can reduce data exchange by the data sender between the baseband processing units. CRC to QAM modulation shown in FIG. 3 are performed based on the granularity of processing blocks, and data transmission is not required between the baseband processing units. During mapping and MIMO coding of the processing blocks, some data may be transmitted or not transmitted according to the actual system complexity.

For example, when there are a large amount of transmitted data and many flows, MIMO coding may be performed based on a smaller granularity obtained through division, to ensure the real-time feature. Therefore, according to this embodiment of the present invention, an amount of data exchanges in the baseband processing process, transmission time, scheduling complexity, a quantity of baseband processing units (that is, concurrency of the baseband processing units is decreased), and operators' costs are reduced.

Optionally, in another embodiment, the processing unit 802 is specifically configured to separately map each second processing block in the modulated second processing blocks to a time-frequency resource block according to a time-frequency resource mapping manner.

For example, the terminal may map the processed second processing blocks to time-frequency resource blocks according to a time-frequency resource mapping manner that is pre-agreed with the terminal or one obtained time-frequency resource mapping manner, that is, separately and individually map the second processing blocks to the time-frequency resource blocks. In a scenario in which there is no pre-agreed time-frequency resource mapping manner, the terminal may send the used time-frequency resource mapping manner to the network node. This embodiment of the present invention sets no limit thereto.

Optionally, in another embodiment, the receiving unit 801 is further configured to receive, from the network node, a first data block division manner, and data that is obtained after the network node performs the first baseband processing based on a granularity of first processing blocks obtained through division according to the first data block division manner. The processing unit 802 is further configured to perform second baseband processing, based on the granularity of first processing blocks, on the data received from the network node.

For example, after determining the first data block division manner used in the downlink communication process, the network node sends the first data block division manner to the terminal, so that the terminal performs, according to the data block division manner, the second baseband processing on the data received from the network node.

It should also be understood that a process in which the terminal performs first baseband processing on data is similar to the process in which the network node performs first baseband processing, and are both used as baseband processing processes that are executed when the terminal or the network node functions as a data sender. Similarly, the second baseband processing process refers to a baseband processing process that is executed when the terminal or the network node functions as a data receiver.

Optionally, in another embodiment, the second baseband processing includes multiple second processing subprocedures, and the processing unit 802 is specifically configured to, in the multiple second processing subprocedures, perform processing, all based on the granularity of first processing blocks, on the data received from the network node.

Optionally, in another embodiment, the multiple second processing subprocedures include demapping, demodulation, descrambling, and channel decoding. In this case, the processing unit 802 is specifically configured to perform demapping, demodulation, descrambling, and channel decoding, based on the granularity of first processing blocks, on the data received from the network node.

For example, the terminal is a data receiver in this case. When the terminal performs baseband processing on transmission data based on the granularity of first processing blocks, the network node may first demap the received transmission data according to the time-frequency resource mapping manner, to obtain the demapped first processing blocks. Then, the terminal processes the demapped first processing blocks based on the granularity of first processing blocks, to obtain the processed first processing blocks. It should be understood that channel decoding generally includes rate dematching, error correction decoding, and a cyclic redundancy check.

With reference to FIG. 4, actions performed by the terminal that functions as a data receiver are described in details below. It should be noted that these examples are provided to help a person skilled in the art better understand this embodiment of the present invention, but not to limit the scope of this embodiment of the present invention.

As shown in FIG. 4, the terminal first demaps the first processing blocks after receiving data. Specifically, the action of demapping the first processing blocks is performed before QAM demodulation is performed on the first processing blocks. As shown in FIG. 4, after receiving the data, the terminal first removes a cyclic prefix CP, and then performs fast Fourier transform FFT.

Then, the terminal performs, according to parsed control information and the time-frequency resource mapping manner, channel separation and channel estimation CE on frequency domain data that is obtained after FFT is performed. That is, during channel separation, the terminal demaps the first processing blocks according to the time-frequency resource mapping manner. Specially, in the MIMO scenario, the terminal further needs to perform MIMO decoding (that is, DE_MIMO) after channel separation. For example, the terminal distributes, based on the granularity of first processing blocks or a smaller granularity (when there are many antennas and flows), data obtained after channel separation to the baseband processing units to perform MIMO decoding.

Then, the baseband processing units separately perform, based on the granularity of first processing blocks, baseband processing on data on which MIMO decoding is to be performed. For example, demodulation, descrambling, rate dematching, turbo decoding (a type of error correction decoding), and CRC are performed on the first processing blocks. Finally, the first processing blocks are aggregated into a complete TB.

The division manner of the first processing blocks and the time-frequency resource mapping manner may be adaptively adjusted according to actual situations, and then delivered to the terminal by means of broadcast, a control channel, or another manner.

The technical solution can reduce data exchange by the data sender between the baseband processing units. CRC to demodulation shown in FIG. 4 are performed based on the granularity of first processing blocks, and data transmission is not required between the baseband processing units. During mapping and MIMO coding of the first processing blocks, some data may be transmitted or not transmitted according to the actual system complexity. For example, when there are a large amount of transmitted data and many flows, MIMO coding may be performed based on a smaller granularity obtained through division, to ensure the real-time feature.

Therefore, according to this embodiment of the present invention, an amount of data exchanges in the baseband processing process, transmission time, scheduling complexity, a quantity of baseband processing units (that is, concurrency of the baseband processing units is decreased), and operators' costs are reduced.

Optionally, in another embodiment, the first baseband processing includes multiple-input multiple-output beamforming MIMO BF coding, and the second baseband processing includes MIMO BF decoding. In this case, the processing unit 802 is specifically configured to perform channel coding, scrambling, modulation, time-frequency resource mapping, and MIMO BF coding on the second processing blocks based on the granularity of second processing blocks; and perform MIMO BF decoding, demapping, demodulation, descrambling, and channel decoding, based on the granularity of first processing blocks, on the data received from the network node.

Optionally, in another embodiment, the capability information of the baseband processing unit includes at least one piece of: capability information of a baseband processing unit of the network node, or capability information of a baseband processing unit of the terminal.

Therefore, the network node may better adapt to actual requirements when determining a data block division manner, to further improve baseband processing performance.

For example, in a downlink single-user MIMO (SU-MIMO) scenario, UE has many receive antennas, and there are many flows to be processed. Therefore, computation complexity is high. In this case, the capability information of the baseband processing unit may include capability information of a baseband processing unit of the UE. The network node may obtain the capability information of the baseband processing unit of the UE from the UE in advance.

In a downlink multi-user MIMO (MU-MIMO) scenario, UE has a few antennas, and there are a few flows to be processed. Therefore, computation complexity is low. In this case, a relatively small amount of data is transmitted, and the capability information of the baseband processing unit may not include capability information of a baseband processing unit of the UE. For the two scenarios SU-MIMO and MU-MIMO, processing complexity of the network node is high, and the capability information of the baseband processing unit may include the capability information of the baseband processing unit of the network node.

For another example, in an uplink MU-MIMO scenario, the network node is a receiver and a decoding process is complex. The capability information of the baseband processing unit may include the capability information of the baseband processing unit of the network node. While a processing procedure of the UE is simpler and the capability information of the baseband processing unit may not include the capability information of the baseband processing unit of the UE.

Optionally, in another embodiment, the time-frequency resource mapping manner includes a block orthogonal time-frequency resource mapping manner or a discrete orthogonal time-frequency resource mapping manner.

As shown in FIG. 5, the part A shows a licensed time-frequency resource in this embodiment of the present invention. The part B shows that the time-frequency resource is divided into N time-frequency resource subblocks in a frequency domain orthogonal manner, and each processing block is mapped to a time-frequency resource subblock. The part C shows that the time-frequency resource is divided into N time-frequency resource subblocks in a time domain and frequency domain orthogonal manner, and each processing block is mapped to a time-frequency resource subblock. The part D shows that the time-frequency resource is divided into (2xN) time-frequency resource subblocks in a time domain and frequency domain orthogonal manner, and each processing block is mapped to two discretely located time-frequency resource subblocks (two time-frequency resource subblocks shown by using a same number). In a specific scenario, mapping according to the time-frequency resource mapping manner corresponding to the part D has a good anti-interference capability.

Under normal circumstances, the block orthogonal time-frequency resource mapping manner is used. When complexity is acceptable, to improve decoding performance, the discrete orthogonal time-frequency resource mapping manner may be used to distribute data into different time-frequency resources. For example, when the terminal side has a relatively poor channel in a time period and in a frequency band. To improve decoding performance, data may be distributed at different time-frequency locations. This can improve the anti-interference capability.

FIG. 9 is a schematic block diagram of a network node according to another embodiment of the present invention.

The network node 90 in FIG. 9 may be configured to implement steps and methods in the method embodiments. In the embodiment shown in FIG. 9, the network node 90 includes an antenna 901, a transmitter 902, a receiver 903, a processor 904, and a memory 905. The processor 904 controls operations of the network node 90 and may be configured to process signals. The memory 905 may include a read-only memory and a random access memory, and provides instructions and data to the processor 904. The transmitter 902 and the receiver 903 may be coupled to the antenna 901. Components of the network node 90 are coupled together by using a bus system 909. In addition to a data bus, the bus system 909 includes a power bus, a control bus, and a status signal bus. However, for clear description, various types of buses in the figure are marked as the bus system 909. For example, the network node 90 may be the base station 102 shown in FIG. 1.

Specifically, the memory 905 may store instructions that are used to perform the following procedures:
determining a first data block division manner according to first baseband capability information, where the first baseband capability information includes at least one piece of: capability information, space layer information, or time-frequency resource information of a baseband processing unit;
dividing a to-be-sent data block into first processing blocks according to the first data block division manner; and
performing first baseband processing on the first processing blocks based on a granularity of first processing blocks.

Based on the technical solutions, a data block division manner is first determined according to baseband capability information in the embodiments of the present invention. Then, a data block is divided into processing blocks according to the data block division manner. In this way, in a baseband processing process, data processing based on a granularity of processing blocks can reduce data exchange involved in data distribution and aggregation between baseband processing units, and therefore can reduce data transmission time in the baseband processing process.

Furthermore, because the data transmission time is reduced in the baseband processing process, a real-time feature of a system is ensured without increasing concurrency of baseband processing units (to reduce computation time in the baseband processing process). Therefore, this embodiment of the present invention can reduce operators' costs.

In addition, according to the method in this embodiment of the present invention, data processing based on a granularity of processing blocks in the baseband processing process not only can reduce an amount of data exchanges between the baseband processing units, but also can lower scheduling complexity.

It should be understood that performing first baseband processing based on a granularity of first processing blocks refers to that the first processing blocks, but not some or multiple first processing blocks in the first processing blocks, are used as a basic data unit in the baseband processing process. In addition, the network node needs to use a unified granularity (the granularity of first processing blocks) to perform data processing in the baseband processing process, but does not change the granularity for processing.

It should also be understood that the first processing blocks are only an expression of data blocks obtained through division according to the data block division manner in this embodiment of the present invention. Data blocks that are obtained through division according to the method in this embodiment of the present invention and applied to a baseband processing process should all fall within the protection scope of this embodiment of the present invention.

Optionally, in one embodiment, the memory 905 may further store instructions that are used to perform the following procedures:
a stronger processing capability, of the baseband processing unit, indicated by the capability information of the baseband processing unit indicates larger first processing blocks obtained through division according to the first data block division manner; a larger quantity of space layers indicated by the space layer information indicates smaller first processing blocks obtained through division according to the first data block division manner; and a higher transmission bandwidth indicated by the time-frequency resource information indicates smaller first processing blocks obtained through division according to the first data block division manner.

Optionally, in another embodiment, the memory 905 may further store instructions that are used to perform the following procedure:
the first baseband processing includes multiple first processing subprocedures, and when first baseband processing is performed on the first processing blocks based on the granularity of first processing blocks, in the multiple first processing subprocedures, performing processing on the first processing blocks all based on the granularity of first processing blocks.

Optionally, in one embodiment, the memory 905 may further store instructions that are used to perform the following procedure:
the multiple first processing subprocedures include channel coding, scrambling, modulation, and time-frequency resource mapping, and when first baseband processing is performed on the first processing blocks based on the granularity of first processing blocks, performing channel coding, scrambling, modulation, and time-frequency resource mapping on the first processing blocks based on the granularity of first processing blocks.

Optionally, in one embodiment, the memory 905 may further store instructions that are used to perform the following procedure:
when time-frequency resource mapping is performed on the first processing blocks based on the granularity of first processing blocks, separately mapping each first processing block in the modulated first processing blocks to a time-frequency resource block according to a time-frequency resource mapping manner.

Optionally, in one embodiment, the memory 905 may further store instructions that are used to perform the following procedure:
the time-frequency resource mapping manner includes a block orthogonal time-frequency resource mapping manner or a discrete orthogonal time-frequency resource mapping manner.

Optionally, in one embodiment, the memory 905 may further store instructions that are used to perform the following procedures:
determining a second data block division manner according to second baseband capability information, where the second baseband capability information includes at least one piece of: the capability information, the space layer information, or the time-frequency resource information of the baseband processing unit;
sending the second data block division manner to a terminal;
receiving, from the terminal, data that is obtained after the terminal performs the first baseband processing based on a granularity of second processing blocks obtained through division according to the second data block division manner; and
performing second baseband processing, based on the granularity of second processing blocks, on the data received from the terminal.

Optionally, in one embodiment, the memory 905 may further store instructions that are used to perform the following procedure:
the second baseband processing includes multiple second processing subprocedures, when second baseband processing is performed, based on the granularity of second processing blocks, on the data received from the terminal, in the multiple second processing subprocedures, performing processing, all based on the granularity of second processing blocks, on the data received from the terminal.

Optionally, in one embodiment, the memory 905 may further store instructions that are used to perform the following procedure:
the multiple second processing subprocedures include demapping, demodulation, descrambling, and channel decoding, and when second baseband processing is performed, based on the granularity of second processing blocks, on the data received from the terminal, performing demapping, demodulation, descrambling, and channel decoding, based on the granularity of second processing blocks, on the data received from the terminal.

Optionally, in one embodiment, the first baseband processing includes multiple-input multiple-output beamforming MIMO BF coding, and the second baseband processing includes MIMO BF decoding, and the memory 905 may further store instructions that are used to perform the following procedures:
when the first baseband processing is performed on the first processing blocks based on the granularity of first processing blocks, performing channel coding, scrambling, modulation, time-frequency resource mapping, and MIMO BF coding on the first processing blocks based on the granularity of first processing blocks; and
when the second baseband processing is performed based on the granularity of second processing blocks on the data received from the terminal, performing MIMO BF decoding, demapping, demodulation, descrambling, and channel decoding, based on the granularity of second processing blocks, on the data received from the terminal.

Optionally, in one embodiment, the memory 905 may further store instructions that are used to perform the following procedure:
the capability information of the baseband processing unit includes at least one piece of: capability information of a baseband processing unit of the network node, or capability information of a baseband processing unit of the terminal.

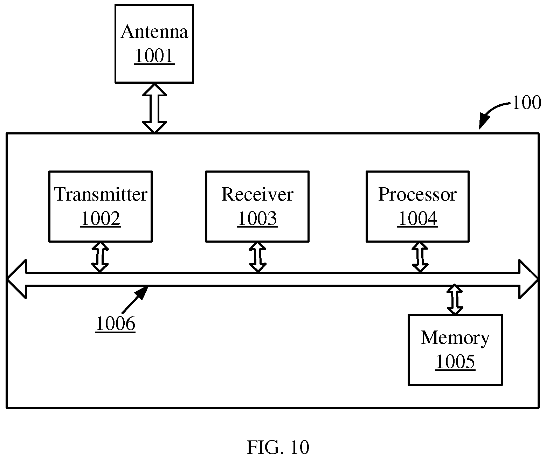

FIG. 10 is a schematic block diagram of a terminal according to another embodiment of the present invention.

The terminal 100 in FIG. 10 may be configured to implement steps and methods in the method embodiments. In the embodiment shown in FIG. 10, the terminal 100 includes an antenna 1001, a transmitter 1002, a receiver 1003, a processor 1004, and a memory 1005. The processor 104 controls operations of the terminal 100 and may be configured to process signals. The memory 1005 may include a read-only memory and a random access memory, and provides instructions and data to the processor 104. The transmitter 1002 and the receiver 1003 may be coupled to the antenna 1001. Components of the terminal 100 are coupled together by using a bus system 1009. In addition to a data bus, the bus system 1009 includes a power bus, a control bus, and a status signal bus. However, for clear description, various types of buses in the figure are marked as the bus system 1009. For example, the terminal 100 may be the access terminal 116 or 122 shown in FIG. 1.

Specifically, the memory 1005 may store instructions that are used to perform the following procedures:
receiving a second data block division manner from a network node, where the second data block division manner is determined by the network node according to second baseband capability information, and the second baseband capability information includes at least one piece of: capability information, space layer information, or time-frequency resource information of a baseband processing unit;
dividing a to-be-sent data block into second processing blocks according to the second data block division manner; and
performing first baseband processing on the second processing blocks based on a granularity of second processing blocks.

Based on the technical solutions, a data block division manner is first determined according to baseband capability information in the embodiments of the present invention. Then, a data block is divided into processing blocks according to the data block division manner. In this way, in a baseband processing process, data processing based on a granularity of processing blocks can reduce data exchange involved in data distribution and aggregation between baseband processing units, and therefore can reduce data transmission time in the baseband processing process.

Furthermore, because the data transmission time is reduced in the baseband processing process, a real-time feature of a system is ensured without increasing concurrency of baseband processing units (to reduce computation time in the baseband processing process). Therefore, this embodiment of the present invention can reduce operators' costs.

In addition, according to the method in this embodiment of the present invention, data processing based on a granularity of processing blocks in the baseband processing process not only can reduce an amount of data exchanges between the baseband processing units, but also can lower scheduling complexity.

It should be understood that performing first baseband processing based on a granularity of second processing blocks refers to that the second processing blocks, but not some or multiple second processing blocks in the second processing blocks, are used as a basic data unit in the baseband processing process. In addition, the network node needs to use a unified granularity (the granularity of second processing blocks) to perform data processing in the baseband processing process, but does not change the granularity for processing.

It should also be understood that the second processing blocks are only an expression of data blocks obtained through division according to the data block division manner in this embodiment of the present invention. Data blocks that are obtained through division according to the method in this embodiment of the present invention and applied to a baseband processing process should all fall within the protection scope of this embodiment of the present invention.

Optionally, in one embodiment, the memory 1005 may further store instructions that are used to perform the following procedures:
a stronger processing capability, of the baseband processing unit, indicated by the capability information of the baseband processing unit indicates larger second processing blocks obtained through division according to the second data block division manner; a larger quantity of space layers indicated by the space layer information indicates smaller second processing blocks obtained through division according to the second data block division manner; and a higher transmission bandwidth indicated by the time-frequency resource information indicates smaller second processing blocks obtained through division according to the second data block division manner.

Optionally, in one embodiment, the memory 1005 may further store instructions that are used to perform the following procedure:
the first baseband processing includes multiple first processing subprocedures, and when first baseband processing is performed on the second processing blocks based on the granularity of second processing blocks, in the multiple first processing subprocedures, performing processing on the second processing blocks all based on the granularity of second processing blocks.

Optionally, in one embodiment, the memory 1005 may further store instructions that are used to perform the following procedure:
the multiple first processing subprocedures include channel coding, scrambling, modulation, and time-frequency resource mapping, and when first baseband processing is performed on the second processing blocks based on the granularity of second processing blocks, performing channel coding, scrambling, modulation, and time-frequency resource mapping on the second processing blocks based on the granularity of second processing blocks.

Optionally, in one embodiment, the memory 1005 may further store instructions that are used to perform the following procedure:
when time-frequency resource mapping is performed on the second processing blocks based on the granularity of second processing blocks, separately mapping each second processing block in the modulated second processing blocks to a time-frequency resource block according to a time-frequency resource mapping manner.

Optionally, in one embodiment, the memory 1005 may further store instructions that are used to perform the following procedure:
the time-frequency resource mapping manner includes a block orthogonal time-frequency resource mapping manner or a discrete orthogonal time-frequency resource mapping manner.

Optionally, in one embodiment, the memory 1005 may further store instructions that are used to perform the following procedures:
receiving, from the network node, a first data block division manner, and data that is obtained after the network node performs the first baseband processing based on a granularity of first processing blocks obtained through division according to the first data block division manner; and
performing second baseband processing, based on the granularity of first processing blocks, on the data received from the network node.

Optionally, in one embodiment, the memory 1005 may further store instructions that are used to perform the following procedure:
the second baseband processing includes multiple second processing subprocedures, and when second baseband processing is performed, based on the granularity of first processing blocks, on the data received from the network node, in the multiple second processing subprocedures, performing processing, all based on the granularity of first processing blocks, on the data received from the network node.

Optionally, in one embodiment, the memory 1005 may further store instructions that are used to perform the following procedure:
the multiple second processing subprocedures include demapping, demodulation, descrambling, and channel decoding, and when second baseband processing is performed, based on the granularity of first processing blocks, on the data received from the network node, performing demapping, demodulation, descrambling, and channel decoding, based on the granularity of first processing blocks, on the data received from the network node.

Optionally, in one embodiment, the memory 1005 may further store instructions that are used to perform the following procedures:
the first baseband processing includes multiple-input multiple-output beamforming MIMO BF coding, and the second baseband processing includes MIMO BF decoding; when the first baseband processing is performed on the second processing blocks based on the granularity of second processing blocks, performing channel coding, scrambling, modulation, time-frequency resource mapping, and MIMO BF coding on the second processing blocks based on the granularity of second processing blocks; and when the second baseband processing is performed, based on the granularity of first processing blocks, on the data received from the network node, performing MIMO BF decoding, demapping, demodulation, descrambling, and channel decoding, based on the granularity of first processing blocks, on the data received from the network node.

Optionally, in one embodiment, the memory 1005 may further store instructions that are used to perform the following procedure:
the capability information of the baseband processing unit includes at least one piece of: capability information of a baseband processing unit of the network node, or capability information of a baseband processing unit of the terminal.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

In the several embodiments provided in the present application, it should be understood that the disclosed system, apparatus, and method may be implemented in other manners. For example, the described apparatus embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (English: Read-Only Memory, ROM for short), a random access memory (English: Random Access Memory, RAM for short), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for processing data, wherein the method comprises:
determining a first data block division manner according to first baseband capability information, wherein the first baseband capability information comprises at least one piece of: capability information, space layer information, or time-frequency resource information of a baseband processing unit;
dividing a to-be-sent data block into first processing blocks according to the first data block division manner; and
performing first baseband processing on the first processing blocks based on a granularity of first processing blocks.

2. The method according to claim 1, wherein a stronger processing capability, of the baseband processing unit, indicated by the capability information of the baseband processing unit indicates larger first processing blocks obtained through division according to the first data block division manner; a larger quantity of space layers indicated by the space layer information indicates smaller first processing blocks obtained through division according to the first data block division manner; and a higher transmission bandwidth indicated by the time-frequency resource information indicates smaller first processing blocks obtained through division according to the first data block division manner.

3. The method according to claim 1 or 2, wherein the first baseband processing comprises multiple first processing subprocedures, and the performing first baseband processing on the first processing blocks based on a granularity of first processing blocks comprises:
in the multiple first processing subprocedures, performing processing on the first processing blocks all based on the granularity of first processing blocks.

4. The method according to claim 3, wherein the multiple first processing subprocedures comprise channel coding, scrambling, modulation, and time-frequency resource mapping, and the performing first baseband processing on the first processing blocks based on a granularity of first processing blocks comprises:
performing channel coding, scrambling, modulation, and time-frequency resource mapping on the first processing blocks based on the granularity of first processing blocks.

5. The method according to claim 4, wherein the performing time-frequency resource mapping on the first processing blocks based on the granularity of first processing blocks comprises:
separately mapping each first processing block in the modulated first processing blocks to a time-frequency resource block according to a time-frequency resource mapping manner.

6. The method according to claim 5, wherein the time-frequency resource mapping manner comprises a block orthogonal time-frequency resource mapping manner or a discrete orthogonal time-frequency resource mapping manner.

7. The method according to any one of claims 1 to 6, wherein the method further comprises:
determining a second data block division manner according to second baseband capability information, wherein the second baseband capability information comprises at least one piece of: the capability information, the space layer information, or the time-frequency resource information of the baseband processing unit;
sending the second data block division manner to a terminal;
receiving, from the terminal, data that is obtained after the terminal performs the first baseband processing based on a granularity of second processing blocks obtained through division according to the second data block division manner; and
performing second baseband processing, based on the granularity of second processing blocks, on the data received from the terminal.

8. The method according to claim 7, wherein the second baseband processing comprises multiple second processing subprocedures, and the performing second baseband processing, based on the granularity of second processing blocks, on the data received from the terminal comprises:
in the multiple second processing subprocedures, performing processing, all based on the granularity of second processing blocks, on the data received from the terminal.

9. The method according to claim 8, wherein the multiple second processing subprocedures comprise demapping, demodulation, descrambling, and channel decoding, and the performing second baseband processing, based on the granularity of second processing blocks, on the data received from the terminal comprises:
performing demapping, demodulation, descrambling, and channel decoding, based on the granularity of second processing blocks, on the data received from the terminal.

10. The method according to any one of claims 7 to 9, wherein
the first baseband processing comprises multiple-input multiple-output beamforming MIMO BF coding, and the second baseband processing comprises MIMO BF decoding;
the performing first baseband processing on the first processing blocks based on a granularity of first processing blocks comprises:
performing channel coding, scrambling, modulation, time-frequency resource mapping, and MIMO BF coding on the first processing blocks based on the granularity of first processing blocks; and
the performing second baseband processing, based on the granularity of second processing blocks, on the data received from the terminal comprises:
performing MIMO BF decoding, demapping, demodulation, descrambling, and channel decoding, based on the granularity of second processing blocks, on the data received from the terminal.

11. The method according to any one of claims 1 to 10, wherein the capability information of the baseband processing unit comprises at least one piece of: capability information of a baseband processing unit of a network node, or capability information of a baseband processing unit of the terminal.

12. A method for processing data, wherein the method comprises:
receiving a second data block division manner from a network node, wherein the second data block division manner is determined by the network node according to second baseband capability information, and the second baseband capability information comprises at least one piece of: capability information, space layer information, or time-frequency resource information of a baseband processing unit;
dividing a to-be-sent data block into second processing blocks according to the second data block division manner; and
performing first baseband processing on the second processing blocks based on a granularity of second processing blocks.

13. The method according to claim 12, wherein a stronger processing capability, of the baseband processing unit, indicated by the capability information of the baseband processing unit indicates larger second processing blocks obtained through division according to the second data block division manner; a larger quantity of space layers indicated by the space layer information indicates smaller second processing blocks obtained through division according to the second data block division manner; and a higher transmission bandwidth indicated by the time-frequency resource information indicates smaller second processing blocks obtained through division according to the second data block division manner.

14. The method according to claim 12 or 13, wherein the first baseband processing comprises multiple first processing subprocedures, and the performing first baseband processing on the second processing blocks based on a granularity of second processing blocks comprises:
in the multiple first processing subprocedures, performing processing on the second processing blocks all based on the granularity of second processing blocks.

15. The method according to claim 14, wherein the multiple first processing subprocedures comprise channel coding, scrambling, modulation, and time-frequency resource mapping, and the performing first baseband processing on the second processing blocks based on a granularity of second processing blocks comprises:
performing channel coding, scrambling, modulation, and time-frequency resource mapping on the second processing blocks based on the granularity of second processing blocks.

16. The method according to claim 15, wherein the performing time-frequency resource mapping on the second processing blocks based on the granularity of second processing blocks comprises:
separately mapping each second processing block in the modulated second processing blocks to a time-frequency resource block according to a time-frequency resource mapping manner.

17. The method according to claim 16, wherein the time-frequency resource mapping manner comprises a block orthogonal time-frequency resource mapping manner or a discrete orthogonal time-frequency resource mapping manner.

18. The method according to any one of claims 12 to 17, wherein the method further comprises:
receiving, from the network node, a first data block division manner, and data that is obtained after the network node performs the first baseband processing based on a granularity of first processing blocks obtained through division according to the first data block division manner; and
performing second baseband processing, based on the granularity of first processing blocks, on the data received from the network node.

19. The method according to claim 18, wherein the second baseband processing comprises multiple second processing subprocedures, and the performing second baseband processing, based on the granularity of first processing blocks, on the data received from the network node comprises:
in the multiple second processing subprocedures, performing processing, all based on the granularity of first processing blocks, on the data received from the network node.

20. The method according to claim 19, wherein the multiple second processing subprocedures comprise demapping, demodulation, descrambling, and channel decoding, and the performing second baseband processing, based on the granularity of first processing blocks, on the data received from the network node comprises:
performing demapping, demodulation, descrambling, and channel decoding, based on the granularity of first processing blocks, on the data received from the network node.

21. The method according to any one of claims 18 to 20, wherein
the first baseband processing comprises multiple-input multiple-output beamforming MIMO BF coding, and the second baseband processing comprises MIMO BF decoding;
the performing first baseband processing on the second processing blocks based on a granularity of second processing blocks comprises:
performing channel coding, scrambling, modulation, time-frequency resource mapping, and MIMO BF coding on the second processing blocks based on the granularity of second processing blocks; and
the performing second baseband processing, based on the granularity of first processing blocks, on the data received from the network node comprises:
performing MIMO BF decoding, demapping, demodulation, descrambling, and channel decoding, based on the granularity of first processing blocks, on the data received from the network node.

22. The method according to any one of claims 12 to 21, wherein the capability information of the baseband processing unit comprises at least one piece of: capability information of a baseband processing unit of the network node, or capability information of a baseband processing unit of a terminal.

23. A network node, wherein the network node comprises:
a determining unit, configured to determine a first data block division manner according to first baseband capability information, wherein the first baseband capability information comprises at least one piece of: capability information, space layer information, or time-frequency resource information of a baseband processing unit; and
a processing unit, configured to divide a to-be-sent data block into first processing blocks according to the first data block division manner, and perform first baseband processing on the first processing blocks based on a granularity of first processing blocks.

24. The network node according to claim 23, wherein a stronger processing capability, of the baseband processing unit, indicated by the capability information of the baseband processing unit indicates larger first processing blocks obtained through division according to the first data block division manner; a larger quantity of space layers indicated by the space layer information indicates smaller first processing blocks obtained through division according to the first data block division manner; and a higher transmission bandwidth indicated by the time-frequency resource information indicates smaller first processing blocks obtained through division according to the first data block division manner.

25. The network node according to claim 23 or 24, wherein the first baseband processing comprises multiple first processing subprocedures, and the processing unit is specifically configured to, in the multiple first processing subprocedures, perform processing on the first processing blocks all based on the granularity of first processing blocks.

26. The network node according to claim 25, wherein the multiple first processing subprocedures comprise channel coding, scrambling, modulation, and time-frequency resource mapping, and the processing unit is specifically configured to perform channel coding, scrambling, modulation, and time-frequency resource mapping on the first processing blocks based on the granularity of first processing blocks.

27. The network node according to claim 26, wherein the processing unit is specifically configured to separately map each first processing block in the modulated first processing blocks to a time-frequency resource block according to a time-frequency resource mapping manner.

28. The network node according to claim 27, wherein the time-frequency resource mapping manner comprises a block orthogonal time-frequency resource mapping manner or a discrete orthogonal time-frequency resource mapping manner.

29. The network node according to claims 23 to 28, wherein the network node further comprises a sending unit and a receiving unit;
the determining unit is further configured to determine a second data block division manner according to second baseband capability information, wherein the second baseband capability information comprises at least one piece of: the capability information, the space layer information, or the time-frequency resource information of the baseband processing unit;
the sending unit is configured to send the second data block division manner to a terminal;
the receiving unit is configured to receive, from the terminal, data that is obtained after the terminal performs the first baseband processing based on a granularity of second processing blocks obtained through division according to the second data block division manner; and
the processing unit is further configured to perform second baseband processing, based on the granularity of second processing blocks, on the data received from the terminal.

30. The network node according to claim 29, wherein the second baseband processing comprises multiple second processing subprocedures, and the processing unit is specifically configured to, in the multiple second processing subprocedures, perform processing, all based on the granularity of second processing blocks, on the data received from the terminal.

31. The network node according to claim 30, wherein the multiple second processing subprocedures comprise demapping, demodulation, descrambling, and channel decoding, and the processing unit is specifically configured to perform demapping, demodulation, descrambling, and channel decoding, based on the granularity of second processing blocks, on the data received from the terminal.

32. The network node according to claim 31, wherein the first baseband processing comprises multiple-input multiple-output beamforming MIMO BF coding, and the second baseband processing comprises MIMO BF decoding; and
the processing unit is specifically configured to perform channel coding, scrambling, modulation, time-frequency resource mapping, and MIMO BF coding on the first processing blocks based on the granularity of first processing blocks; and perform MIMO BF decoding, demapping, demodulation, descrambling, and channel decoding, based on the granularity of second processing blocks, on the data received from the terminal.

33. The network node according to claims 23 to 32, wherein the capability information of the baseband processing unit comprises at least one piece of: capability information of a baseband processing unit of the network node, or capability information of a baseband processing unit of the terminal.

34. A terminal, wherein the terminal comprises:
a receiving unit, configured to receive a second data block division manner from a network node, wherein the second data block division manner is determined by the network node according to second baseband capability information, and the second baseband capability information comprises at least one piece of: capability information, space layer information, or time-frequency resource information of a baseband processing unit; and
a processing unit, configured to divide a to-be-sent data block into second processing blocks according to the second data block division manner, and perform first baseband processing on the second processing blocks based on a granularity of second processing blocks.

35. The terminal according to claim 34, wherein a stronger processing capability, of the baseband processing unit, indicated by the capability information of the baseband processing unit indicates larger second processing blocks obtained through division according to the second data block division manner; a larger quantity of space layers indicated by the space layer information indicates smaller second processing blocks obtained through division according to the second data block division manner; and a higher transmission bandwidth indicated by the time-frequency resource information indicates smaller second processing blocks obtained through division according to the second data block division manner.

36. The terminal according to claim 34 or 35, wherein the first baseband processing comprises multiple first processing subprocedures, and the processing unit is specifically configured to, in the multiple first processing subprocedures, performing processing on the second processing blocks all based on the granularity of second processing blocks.

37. The terminal according to claim 36, wherein the multiple first processing subprocedures comprise channel coding, scrambling, modulation, and time-frequency resource mapping, and the processing unit is specifically configured to perform channel coding, scrambling, modulation, and time-frequency resource mapping on the second processing blocks based on the granularity of second processing blocks.

38. The terminal according to claim 37, wherein the processing unit is specifically configured to separately map each second processing block in the modulated second processing blocks to a time-frequency resource block according to a time-frequency resource mapping manner.

39. The terminal according to claim 38, wherein the time-frequency resource mapping manner comprises a block orthogonal time-frequency resource mapping manner or a discrete orthogonal time-frequency resource mapping manner.

40. The terminal according to any one of claims 34 to 39, wherein
the receiving unit is further configured to receive, from the network node, a first data block division manner, and data that is obtained after the network node performs the first baseband processing based on a granularity of first processing blocks obtained through division according to the first data block division manner; and
the processing unit is further configured to perform second baseband processing, based on the granularity of first processing blocks, on the data received from the network node.

41. The terminal according to claim 40, wherein the second baseband processing comprises multiple second processing subprocedures, and the processing unit is specifically configured to, in the multiple second processing subprocedures, perform processing, all based on the granularity of first processing blocks, on the data received from the network node.

42. The terminal according to claim 41, wherein the multiple second processing subprocedures comprise demapping, demodulation, descrambling, and channel decoding, and the processing unit is specifically configured to perform demapping, demodulation, descrambling, and channel decoding, based on the granularity of first processing blocks, on the data received from the network node.

43. The terminal according to claim 42, wherein the first baseband processing comprises multiple-input multiple-output beamforming MIMO BF coding, and the second baseband processing comprises MIMO BF decoding; and
the processing unit is specifically configured to perform channel coding, scrambling, modulation, time-frequency resource mapping, and MIMO BF coding on the second processing blocks based on the granularity of second processing blocks; and perform MIMO BF decoding, demapping, demodulation, descrambling, and channel decoding, based on the granularity of first processing blocks, on the data received from the network node.

44. The terminal according to any one of claims 33 to 42, wherein the capability information of the baseband processing unit comprises at least one piece of: capability information of a baseband processing unit of the network node, or capability information of a baseband processing unit of the terminal.
